# EUROPEAN PATENT APPLICATION

(11) **EP 1 955 623 A1**
(43) Date of publication of application: **13.08.2008**
(21) Application number: 06833514.0
(22) Date of filing: 28.11.2006
(51) Int. Cl.: A47J 27/16, A47J 31/44, G07F 13/08

(54) **LIQUID FOOD HEATING APPARATUS AND STEAM JET NOZZLE FOR LIQUID FOOD HEATING APPARATUS**

(30) Priority: 29.11.2005 JP 2005343286
(71) Applicant: Sanden Corporation, Isesaki-shi, Gunma 372-8502 (JP)
(72) Inventor: KANUMA, Yoshihiko, SANDEN CORPORATION, Isesaki-shi Gunma 3728502 (JP); SHIOYA, Morihisa, SANDEN CORPORATION, Isesaki-shi Gunma 3728502 (JP); KUSAKABE, Katsuhiko, SANDEN CORPORATION, Isesaki-shi Gunma 3728502 (JP); TAMURA, Misao, SANDEN CORPORATION, Isesaki-shi Gunma 3728502 (JP)
(74) Representative: Haley, Stephen
(86) International application number: PCT/JP2006/323710
(87) International publication number: WO 2007/063845

(57) **Abstract**

A liquid food heating apparatus includes: a steam jet nozzle (36), a nozzle holder (18) to which the steam jet nozzle (36) is attached; a steam feed pipe (17), nozzle coupling means (14a, 14b, 14c) capable of coupling the steam jet nozzle (36) attached to the nozzle holder (18) to the steam feed pipe (17), and nozzle discard means (12b, 12c, 12d, 18c) capable of detaching from the nozzle holder (18) the steam jet nozzle (36) attached to the nozzle holder (18) and discarding the nozzle. The nozzle discard means detaches from the nozzle holder (18) the steam jet nozzle (36) attached to the nozzle holder (18) and discards the nozzle after releasing the coupling between the steam jet nozzle (36) attached to the nozzle holder (18) and the steam feed pipe (17).

## Description

### Technical field

The present invention relates to a liquid food heating apparatus for heating a liquid food using steam, and a steam jet nozzle used for the liquid food heating apparatus.

### Background art

The liquid food heating apparatus of this type has a steam jet nozzle. This liquid food heating apparatus heats a liquid food to be heated by inserting the steam jet nozzle into the liquid food, for example, soup etc. at or lower than a normal temperature, stored in a cup, and jetting steam to the liquid food from the steam jet nozzle.

The liquid food heating apparatus of a type that repeatedly uses the steam jet nozzle has a nozzle cleaning mechanism for keeping the steam jet nozzle hygienically. This apparatus can remove the liquid food attached to the steam jet nozzle pulled out of the heated liquid food by steam or water.

Instead of the above-mentioned apparatus, the liquid food heating apparatus of a type that does not repeatedly use a steam jet nozzle is proposed. This apparatus is provided with means for letting out and cutting a long flexible tube by a predetermined length, and means for moving the cut tube and making communication with a steam feed path so that the cut tube functioning as a steam jet nozzle can be replaced each time the apparatus heats the liquid food.
Patent Document 1: Japanese Patent Publication No. 2003-70644
Patent Document 2: Japanese Patent Publication No. H7-100063
Patent Document 3: Japanese Patent Publication No. H6-78852

### Disclosure of the invention

### Problems to be solved by the invention

Since the liquid food heating apparatus of the type that does not repeatedly use the steam jet nozzle has no nozzle cleaning mechanism as provided for the liquid food heating apparatus of the type that repeatedly uses the steam jet nozzle, the problem with a nozzle cleaning operation of, such as, insufficient cleaning, waste water after cleaning, etc can be solved.

However, since this liquid food heating apparatus uses the cut tube as the steam jet nozzle, which tube is made by letting out the long flexible tube by the predetermined length and cutting it, it is difficult to appropriately heat the liquid food by steam jet from the cut tube.

That is, since the cut tube of the predetermined length is possibly curled by its flexibility and property of curling, it is difficult to realize the same heating effect in every heating operation because variance of style in which the cut tube is inserted into a cup, thereby causing the problem of unstable heating even by feeding steam for the same time period. Additionally, since the cut tube jets steam downward only from its lower end aperture, it cannot use another steam jetting style of, for example, jetting steam sideward from the lower side surface.

An object of the present invention is to provide a liquid food heating apparatus that does not need the conventional nozzle cleaning mechanism, can stably heat a liquid food in each heating operation, and selectively using the steam jet nozzle in different steam jetting styles, and selectively uses the steam jet nozzle in different steam jetting style; and a steam jet nozzle appropriate for the liquid food heating apparatus.

### Means for solving the problems

To attain the above-mentioned object, a liquid food heating apparatus involved with the present invention, which heats a liquid food using steam, comprises: a replaceable steam jet nozzle having a predetermined shape; a nozzle holder to and from which the steam jet nozzle is attachable and detachable; a steam feed pipe coupled to the steam jet nozzle attached to the nozzle holder to be able to feed a steam into the steam jet nozzle; nozzle coupling means capable of coupling the steam jet nozzle attached to the nozzle holder to the steam feed pipe before heating the liquid food, and releasing the coupling between the steam jet nozzle attached to the nozzle holder and the steam feed pipe after heating the liquid food; and nozzle discard means capable of detaching from the nozzle holder the steam jet nozzle attached to the nozzle holder and discarding the steam jet nozzle after releasing the coupling between the steam jet nozzle attached to the nozzle holder and the steam feed pipe.

According to this liquid food heating apparatus, it is possible to automatically detach and discard the used steam jet nozzle attached to the nozzle holder from the nozzle holder by the nozzle discard means after releasing the coupling between the steam jet nozzle and the steam feed pipe. Therefore, there is no need to use the nozzle cleaning mechanism which uesd in the liquid food heating apparatus of the type that repeatedly uses the steam jet nozzle. In addition, since a previously prepared steam jet nozzle is used for replacement, the liquid food can be stably heated in each heating operation without variance of inserting style to the cup. Furthermore, since any steam jet nozzle can be adopted if it can be attached to and detached from the nozzle holder, other steam jet nozzles having different steam jetting styles can be selectively used depending on the type etc. of liquid food to be heated.

Additionally, the steam jet nozzle involved with the present invention, includes a cylindrical straight pipe section and a coupling section formed at an upper end of the straight pipe section, having a diameter larger than the straight pipe section, and having a conical shape portion at its lower surface. This steam jet nozzle can be attached to the nozzle holder in a state where the straight pipe section is positioned in the nozzle attachment slit, and the conical shape portion of the coupling section is supported at an edge of the nozzle attachment slit.

### Advantages of the invention

The present invention can provide the liquid food heating apparatus that does not need the conventional nozzle cleaning mechanism, can stably heat the liquid food in each heating operation, and selectively using the steam jet nozzle in different steam jetting styles, and selectively uses the steam jet nozzle in different steam jetting style; and the steam jet nozzle appropriate for the liquid food heating apparatus.

The above-mentioned object and other objects, features, and operations/effects of the present invention will be clear by following explanation and attached drawings.

### Brief description of the drawings

Figure 1 is a front view of a liquid food heating apparatus according to a first embodiment of the present invention;
Figure 2 is a top view of Figure 1;
Figure 3 is a top view of a second slider shown in Figure 1;
Figure 4 is a top view of a nozzle holder shown in Figure 1;
Figure 5 is a side view and a cutaway view of a main part of a steam feed pipe shown in Figure 1;
Figure 6 is a side view, a top view, and a sectional view of a steam jet nozzle;
Figure 7 is a side view and a sectional view of a cup;
Figure 8 shows a configuration of a control system provided for the liquid food heating apparatus shown in Figure 1;
Figure 9 is a front view of a panel section of an operating unit shown in Figure 8;
Figure 10 is a basic flowchart of a cooking process;
Figure 11 shows in detail the cooking process shown in Figure 10;
Figure 12 is an explanatory view of an operation of the liquid food heating apparatus shown in Figure 1;
Figure 13 is an explanatory view of the operation of the liquid food heating apparatus shown in Figure 1;
Figure 14 is an explanatory view of the operation of the liquid food heating apparatus shown in Figure 1;
Figure 15 is an explanatory view of the operation of the liquid food heating apparatus shown in Figure 1;
Figure 16 is an explanatory view of the operation of the liquid food heating apparatus shown in Figure 1;
Figure 17 is an explanatory view of the operation of the liquid food heating apparatus shown in Figure 1;
Figure 18 is an explanatory view of the operation of the liquid food heating apparatus shown in Figure 1;
Figure 19 is an explanatory view of the operation of the liquid food heating apparatus shown in Figure 1;
Figure 20 is an explanatory view of the operation of the liquid food heating apparatus shown in Figure 1;
Figure 21 is an explanatory view of the operation of the liquid food heating apparatus shown in Figure 1;
Figure 22 is an explanatory view of the operation of the liquid food heating apparatus shown in Figure 1;
Figure 23 is an explanatory view of the operation of the liquid food heating apparatus shown in Figure 1;
Figure 24 is a front view of a main part of a liquid food heating apparatus according to a second embodiment of the present invention;
Figure 25 is a side view shown in Figure 24;
Figure 26 is a cutaway view of a main part of a steam feed pipe shown in Figure 24;
Figure 27 is a top view of a holder guide, a nozzle holder, and a cover plate shown in Figure 24;
Figure 28 is a view from an arrow lines a-a and b-b shown in Figure 27;
Figure 29 is a side view, a top view, and a sectional view of a steam jet nozzle;
Figure 30 shows a configuration of a control system provided for the liquid food heating apparatus shown in Figure 24;
Figure 31 is an explanatory view of an operation of the liquid food heating apparatus shown in Figure 24;
Figure 32 is an explanatory view of the operation of the liquid food heating apparatus shown in Figure 24;
Figure 33 is an explanatory view of the operation of the liquid food heating apparatus shown in Figure 24;
Figure 34 is an explanatory view of the operation of the liquid food heating apparatus shown in Figure 24;
Figure 35 is an explanatory view of the operation of the liquid food heating apparatus shown in Figure 24;
Figure 36 is an explanatory view of the operation of the liquid food heating apparatus shown in Figure 24;
Figure 37 is an explanatory view of the operation of the liquid food heating apparatus shown in Figure 24; and
Figure 38 is an explanatory view of the operation of the liquid food heating apparatus shown in Figure 24.

### Description of symbols

- 12: guide plate
- 12b: pulley
- 12c: endless belt
- 12d: first motor
- 13: first slider
- 14: support plate
- 14a: pulley
- 14b: endless belt
- 14c: second motor
- 15: guide rod
- 16: second slider
- 17: steam feed pipe
- 17a: straight pipe section
- 17b: coupling section
- 18: nozzle holder
- 18b: nozzle attachment slit
- 18c: nozzle push pin
- 20: collection box
- 36: steam jet nozzle
- 36a: straight pipe section
- 36a1: inside hole
- 36a2: jet hole
- 36b: coupling section
- 37: cup
- 17': steam feed pipe
- 36': steam jet nozzle
- 36a': straight pipe section
- 36a1': inside hole
- 36a2': jet hole
- 36b': coupling section
- 41: frame
- 42: guide rod
- 43: support plate
- 43b: first motor
- 43c: first pinion
- 44: guide rod
- 45: up-and-down slider
- 45a: rack
- 46: holder guide
- 46d: nozzle push chip
- 47: nozzle holder
- 47a: rack
- 47d: nozzle attachment slit
- 48: cover plate
- 49b: second motor
- 49c: second pinion

### Best mode for carrying out the invention

### [First Embodiment]

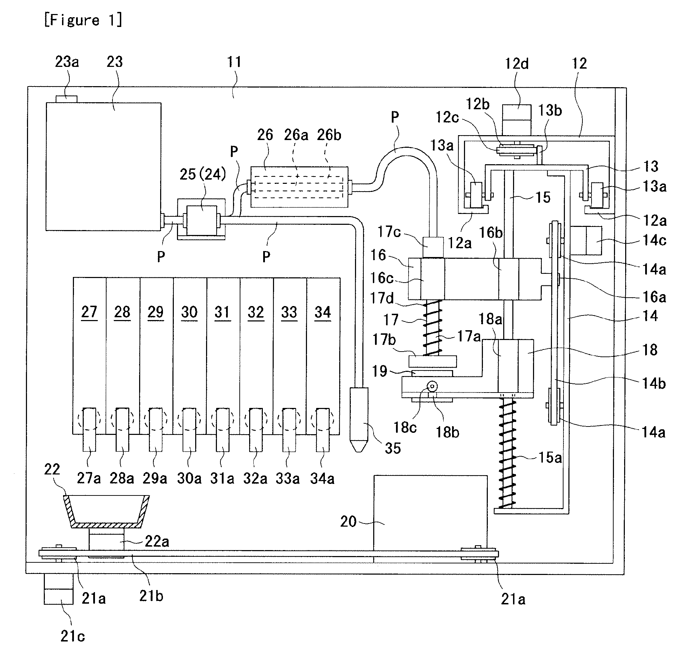

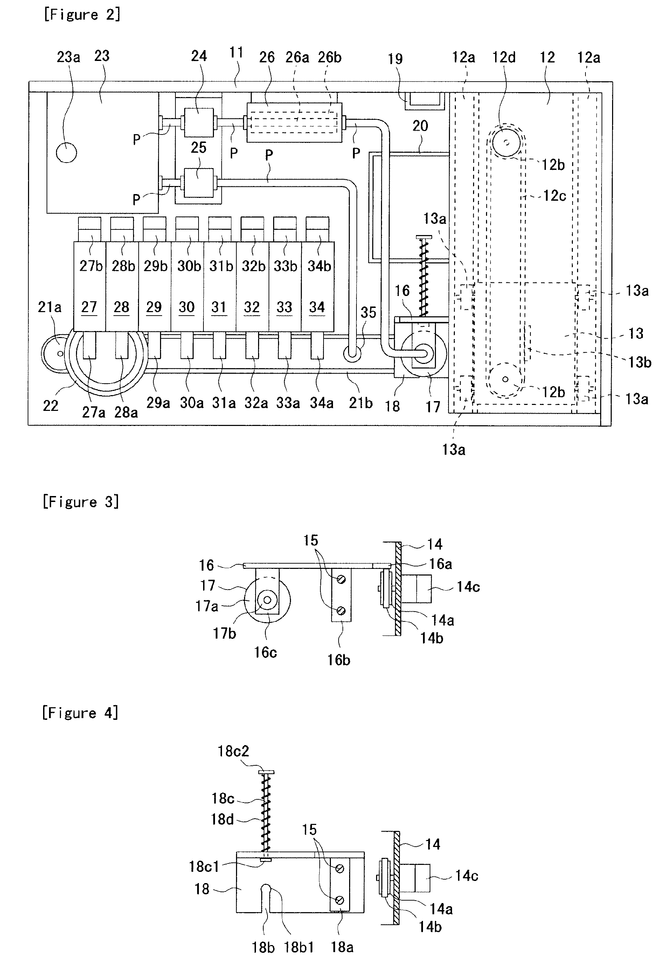

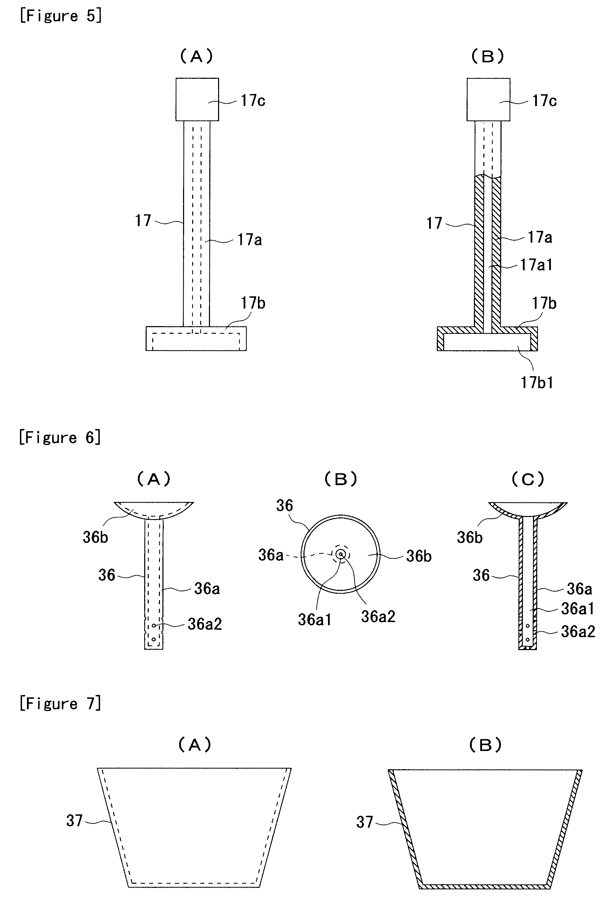

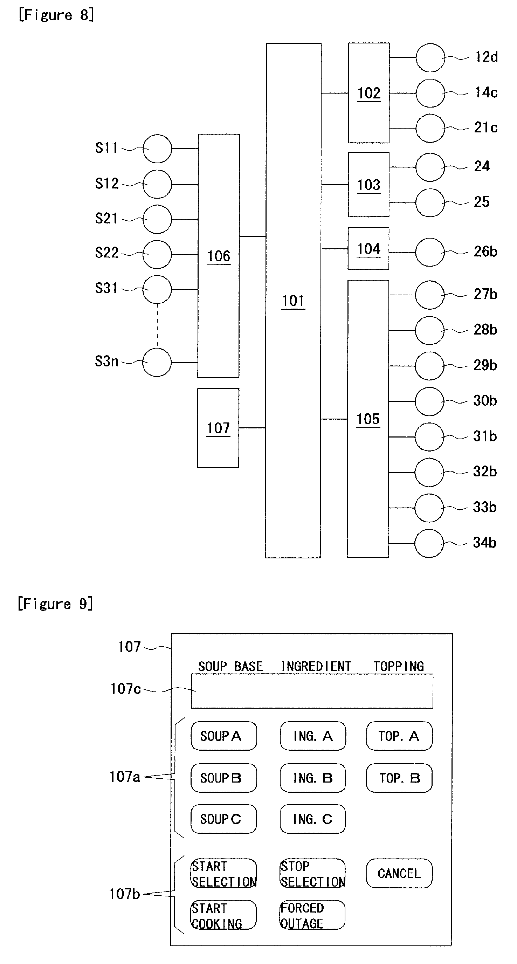

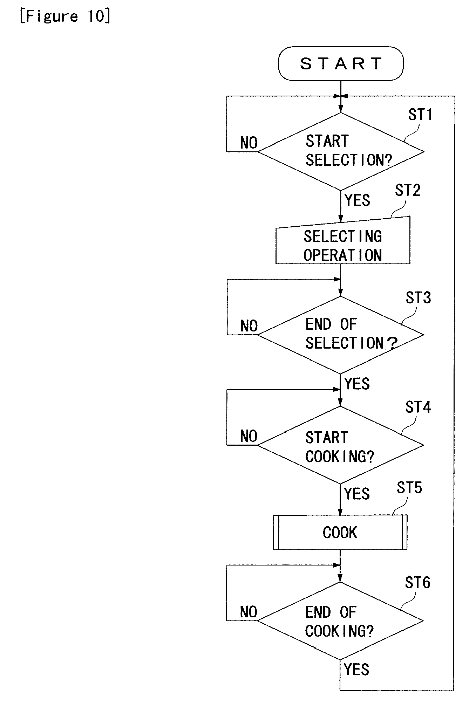

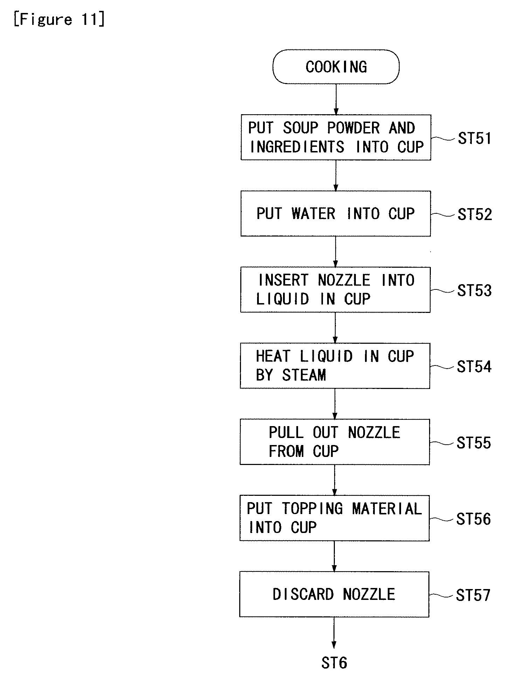

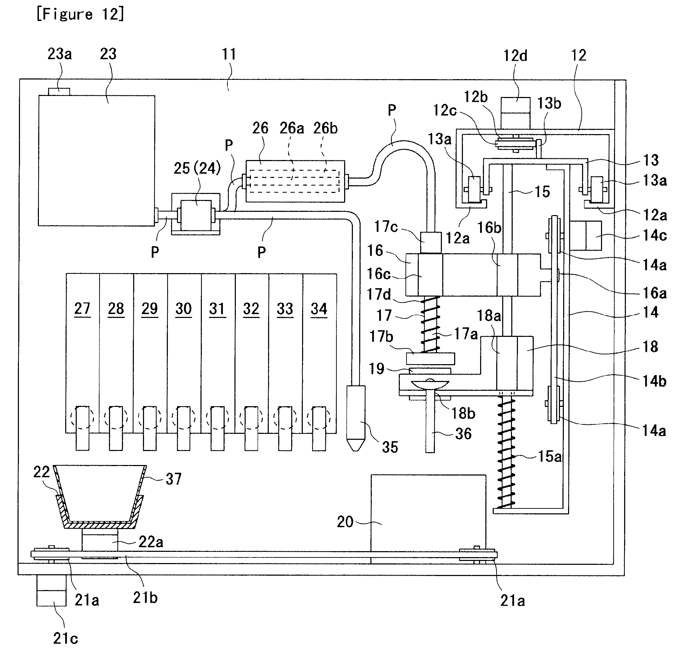

Figures 1 to 23 show the first embodiment of the present invention. Figure 1 is a front view of the liquid food heating apparatus. Figure 2 is a top view of Figure 1. Figure 3 is a top view of the second slider shown in Figure 1. Figure 4 is a top view of the nozzle holder shown in Figure 1. Figure 5 is a side view and a cutaway view of the main part of the steam feed pipe shown in Figure 1. Figure 6 is a side view, a top view, and a sectional view of the steam jet nozzle. Figure 7 is a side view and a sectional view of a cup. Figure 8 shows the configuration of the control system provided for the liquid food heating apparatus shown in Figure 1. Figure 9 is a front view of the panel section of the operating unit shown in Figure 8. Figure 10 is a basic flowchart of a cooking process. Figure 11 shows in detail the cooking process shown in Figure 10. Figures 12 to 23 are explanatory views of the operation of the liquid food heating apparatus.

In the descriptions below, the front side of Figure 1 is defined as the front, the back side as the back, the left side as the left, and the right side as the right.

First, with reference to Figures 1 to 7, the mechanism of the liquid food heating apparatus shown in Figure 1 is described below.

Figures 1 to 7 show a base 11, a guide plate 12, a first slider 13, a support plate 14, a guide rod 15, a second slider 16, a steam feed pipe 17, a nozzle holder 18, a pressure plate 19, a collection box 20, a cup holder 22, a water tank 23, a first pump 24, a second pump 25, a steam generator 26, storage cases 27 to 34, a water feed nozzle 35, a steam jet nozzle 36, and a cup 37.

The guide plate 12 is provided on the right wall of the base 11. Rail sections 12a extending back and forth direction are provided on the left and right walls of the guide plate 12. A pair of back and front pulleys 12b are provided on the upper wall of the guide plate 12 and the pulleys 12b can freely rotate. An endless belt 12c is wound around the pulleys 12b. A first motor 12d is provided on the upper wall of the guide plate 12 to rotate the back pulley 12b in normal and reverse directions.

Two back and front rollers 13a are provided on the left wall of the first slider 13, and the two rollers 13a can freely rotate. Two back and front rollers 13a are also provided on the right wall, and the two rollers 13a can freely rotate. The two left rollers 13a can run along the rail section 12a on the left of the guide plate 12, and the two right rollers 13a can run along the rail section 12a on the right of the guide plate 12. An engaging chip 13b is provided at the center of the upper wall of the first slider 13, and the engaging chip 13b is connected to the endless belt 12c. That is, the first slider 13 can be moved back and forth by the rotation of the endless belt 12c by the first motor 12d.

Furthermore, the support plate 14 is provided on the upper wall of the first slider 13. A pair of upper and lower pulleys 14a are provided on the right wall of the support plate 14, and the pulleys 14a can freely rotate. An endless belt 14b is wound around the pulleys 14a. A second motor 14c for rotating the upper pulley 14a in the normal and reverse directions is provided on the right wall of the support plate 14.

Two front and back guide rods 15 are provided with space between each other between the upper wall of the first slider 13 and the bottom wall of the support plate 14. A spring member 15a for supporting the nozzle holder 18 is provided below each guide rod 15.

The second slider 16 is an elongated rectangle. As can be seen in Figure 3, an engaging chip 16a is provided at the center of the right end of the second slider 16, and the engaging chip 16a is connected to the endless belt 14b. A bush 16b for the guide rod 15 is provided on the right of the second slider 16, and the two guide rods 15 pass through the bush 16b. That is, the second slider 16 can move up and down by the rotation of the endless belt 14b by the second motor 14c. Furthermore, a bush 16c for the steam feed pipe 17 is provided on the left of the second slider 16.

As shown in Figure 5, the steam feed pipe 17 includes a cylindrical straight pipe section 17a, a cylindrical coupling section 17b integrally formed with the cylindrical straight pipe section 17a at the lower end of the straight pipe section 17a, and a cylindrical connecting section 17c provided at the upper end of the straight pipe section 17a. The diameters of the coupling section 17b and the connecting section 17c are larger than the diameter of the straight pipe section 17a. The straight pipe section 17a has an inside hole 17a1 as a path of steam, and the coupling section 17b has a cavity 17b1 having a circular cross section and receiving a coupling section 36b of the steam jet nozzle 36. The diameter of the cavity 17b1 is larger than the diameter of the coupling section 36b of the steam jet nozzle 36. The connecting section 17c is served to connect the inside hole 17a1 of the straight pipe section 17a to the inside hole of the pipe P. The straight pipe section 17a of the steam feed pipe 17 is passed through the bush 16c of the second slider 16, and urged downward by a spring member 17d interposed between the lower end of the bush 16c and the coupling section 17b. The urge of the spring member 17d is smaller than the sum of the urge of the two spring members 15a. The fall position of the steam feed pipe 17 with respect to the second slider 16 is restricted by the connecting section 17c abutting the upper end of the bush 16c. That is, the steam feed pipe 17 can rise with respect to the second slider 16 by applying upward force stronger than the urge of the spring member 17d.

The nozzle holder 18 has a roughly L-shaped. As can be seen in Figure 4, a bush 18a for the guide rod 15 is provided on the right of the nozzle holder 18, and the two guide rods 15 are passed through the bush 18a. Two spring members 15a provided for the respective guide rods 15 support the lower surface of the nozzle holder 18. That is, the nozzle holder 18 can fall by applying downward force stronger than the urge of the two spring members 15a.

A nozzle attachment slit 18b for attachment of the steam jet nozzle 36 is provided at the bottom wall of the nozzle holder 18. The nozzle attachment slit 18b faces back and forth and is open at the front end. The width of the nozzle attachment slit 18b is a little smaller than the diameter of a straight pipe section 36a of the steam jet nozzle 36, and the nozzle attachment slit 18b has at its bottom a circular section 18b1 having the diameter substantially equal to the diameter of the straight pipe section 36a of the steam jet nozzle 36. The center axis of the bottom portion (circular section 18b1) of the nozzle attachment slit 18b matches with the central axis of the steam feed pipe 17 vertically.

Furthermore, a nozzle push pin 18c is provided on the back wall of the nozzle holder 18. The nozzle push pin 18c has diameter expansion sections 18c1 and 18c2 at the front and back ends, and disposed to pass through the back wall of the nozzle holder 18, and is urged backward by a spring member 18d interposed between the back diameter expansion section 18c2 and the back wall. The recessed position of the nozzle push pin 18c is restricted by the front diameter expansion section 18c1 abutting the back wall. That is, the nozzle push pin 18c can move forward with respect to the nozzle holder 18 by applying the forward force stronger than the force of the spring member 18d.

The cross section of the pressure plate 19 has a squared U-shape cross section. The pressure plate 19 is provided on the back wall of the base 11 with the front surface facing the back diameter expansion section 18c2 of the nozzle push pin 18c. The pressure plate 19 pushes and presses the back diameter expansion section 18c2 of the nozzle push pin 18c to move forward the nozzle push pin 18c against the urge of the spring member 18d when the first slider 13 and the support plate 14 move backward.

The collection box 20 collects the steam jet nozzle 36 after the nozzle is used, and is positioned near the pressure plate 19.

A pair of right and left pulleys 21a is provided on the bottom wall of the base 11, and the pulleys can freely rotate. An endless belt 21b is wound around the pulleys 21a. A third motor 21c is provided at the bottom wall of the base 11 to rotate the left pulley 21a in the normal and reverse directions.

The cup holder 22 takes the form of an inverted cone as a whole. The cup holder 22 has a cavity (not assigned a symbol) for receiving the cup 37, and is coupled to the endless belt 21b through a bracket 22a. That is, the cup holder 22 can be moved from side to side by the rotation of the endless belt 21b by the third motor 21c.

The water tank 23 has a supply inlet 23a with a cover at the top surface, and is arranged at the back wall of the base 11 through an appropriate fixture (not shown in the attached drawings). The water tank 23 stores drinking water.

The first pump 24 is used to supply water in the water tank 23 to the steam generator 26, and its inlet (not assigned a symbol) is connected to the outlet of the water tank 23 through a pipe P. The second pump 25 is used to supply water in the water tank 23 to the water feed nozzle 35, and its inlet (not assigned a symbol) is connected to the outlet (not assigned a symbol) of the water tank 23 through the pipe P. The pumps 24 and 25 are arranged on the back wall of the base 11 through appropriate fixtures (not assigned a symbol).

The steam generator 26 has an elongated water path 26a and an electric heater 26b for heating the water passing through the water path 26a and evaporating the water during the passage and generating steam. The steam generator 26 is arranged on the back wall of the base 11 through an appropriate fixture (not assigned a symbol). The inlet of the steam generator 26 is connected to the outlet of the first pump 24 through the pipe P, and the outlet is connected to the connecting section 17c of the steam feed pipe 17 through the pipe P.

The storage cases 27 to 34 are used to store each type of necessary materials in producing soup, and are arranged in order from side to side using appropriate fixtures (not assigned a symbol) on the bottom wall of the base 11. Each type of soup powder as soup base is stored in the storage cases 27 to 29, each type of dried materials is stored in the storage cases 30 to 32, and each type of dried topping material is stored in the storage cases 33 and 34. The soup powder can be consomme powder, creamy soup powder, etc., the ingredients are dried vegetables, dried meat, etc. , and the topping materials are crouton, dried parsley, etc. Each of the storage cases 27 to 34 has the respective feed outlets 27a to 34a at the lower portion of the front surface, a mechanism (not shown in the attached drawings) for feeding a predetermined amount of materials from each of the feed outlets 27a to 34a, and the fourth to eleventh motors 27b to 34b for operating the mechanism. As can be seen in Figure 2, the feed outlets 27a to 34a of the storage cases 27 to 34 are arranged above the cup holder 22 that moves from side to side.

The water feed nozzle 35 is used to feed water to the cup 37, and is arranged on the bottom wall of the base 11 through an appropriate fixture (not shown in the attached drawings). The inlet of the water feed nozzle 36 is connected to the outlet of the first pump 24 through the pipe P. As can be seen in Figure 2, the water feed nozzle 35 is positioned above the cup holder 22 moving from side to side.

As shown in Figure 6, the steam jet nozzle 36 has the cylindrical straight pipe section 36a, and the conical coupling section 36b integrally formed with the upper end of the straight pipe section 36a and having a diameter larger than the diameter of the straight pipe section 36a. The straight pipe section 36a has the inside hole 36a1 as a path of steam, and a plurality of jet holes 36a2 at the lower side surface and the lower surface. The steam jet nozzle 36 is totally made of plastics.

The cup 37 takes the form of an inverted cone as a whole as shown in Figure 7. The cup is totally made of paper or plastics, and can be attached to the cup holder 22, and also detached from the cup holder 22.

Next, the control system provided for the liquid food heating apparatus shown in Figure 1 is described below with reference to Figures 8 and 9.

Figure 8 shows a controller 101, a first driver 102 for a motor, a second driver 103 for a pump, a third driver 104 for a heater, a fourth driver 105 for a motor, a detector 106, and an operation unit 107.

The controller 101 has a microcomputer built-in, and its memory stores, in addition to the program for performing the process shown in Figures 10 and 11, various data about the materials stored in each of the storage cases 27 to 34 and the heating time, etc. corresponding to the selected materials.

The first driver 102 for a motor transmits a drive signal to the first to third motors 12d, 14c, and 21c according to the control signal from the controller 101. The first to third motors 12d, 14c, and 21c are DC motors with decelerators.

The second driver 103 transmits a drive signal to the first and second pumps 24 and 25 according to the control signal from the controller 101. The first and second pumps 24 and 25 are pumps called electromagnetic pumps.

The third driver 104 transmits a drive signal to the electric heater 26b of the steam generator 26 according to the control signal from the controller 101.

To the detector 106, connected are two sensors S11, S11 for detecting the stop position of the first slider 13 in back and forth direction, two sensors S21, S21 for detecting the stop position of the second slider 16 in up and down direction, and N sensors S31 to S3n for detecting the stop position of the cup holder 22 in right and left direction. Each sensor is configured by a microswitch etc. and a sensing signal of each sensor is transmitted to the controller 101 through the detector 106.

The operation unit 107 includes a material selection buttons 107a, an operation selection buttons 107b, and a indicator 107c such as an LCD etc. for displaying a selected material as its panel section being shown in Figure 9. A signal based on the pressure of the material selection buttons 107a and the operation selection buttons 107b is transmitted to the controller 101 from the operation unit 107, and the data such as characters etc. displayed on the indicator 107c is transmitted from the controller 101 to the operation unit 107.

Next, the operation of the liquid food heating apparatus shown in Figure 1 is described below with reference to Figures 10 to 23.

The liquid food heating apparatus shown in Figure 1 is installed in a restaurant, a fast food restaurant, etc. and the operation of the apparatus is performed by the staff of the restaurant based on the order contents. A customer has two ways of placing an order, that is, a method of ordering specific soup from a prepared menu, and a method of ordering the original soup by specifying favorite materials.

After receiving the order, the staff presses a selection start button of the operation unit 107, then appropriately presses the material selection buttons 107a according to the order contents, and selects the materials. In the former selecting method, the materials can be selected from a predetermined recipe for each soup. In the latter selecting method, the materials can be selected depending on the order (steps ST1 and ST2 shown in Figure 10). The selected materials can be confirmed on the indicator 107c. If an erroneous input is made during selecting the materials, the staff can press a cancel button, and the operation is started again.

After the materials are selected, the staff presses a selection end button of the operation unit 107 and then the indicator 107c displays the message "Set cup and nozzle". The staff confirms the message, attaches the cup 37 to the cup holder 22 as shown in Figure 12, and attaches the steam jet nozzle 36 to the nozzle attachment slit 18b of the nozzle holder 18 (step ST3 shown in Figure 10) .

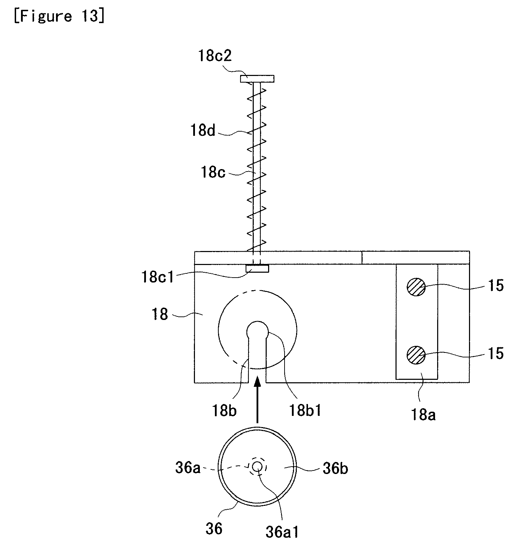

The attachment of the steam jet nozzle 36 can be performed by one of the method of pushing the straight pipe section 36a of the steam jet nozzle 36 from the front into the nozzle attachment slit 18b to allow the straight pipe section 36a to reach the circular section 18b1 as shown in Figure 13, and the method of inserting the straight pipe section 36a of the steam jet nozzle 36 from above into the circular section 18b1 of the nozzle attachment slit 18b. The steam jet nozzle 36 is attached having the straight pipe section 36a inserted into the circular section 18b1 of the nozzle attachment slit 18b, and having the coupling section 36b supported at the ridge of the circular section 18b1. Since the width of the nozzle attachment slit 18b is a little smaller than the diameter of the straight pipe section 36a, the steam jet nozzle 36 after the attachment does not easily move forward along the nozzle attachment slit 18b. Furthermore, since the diameter of the coupling section 36b of the steam jet nozzle 36 is larger than the width of the nozzle attachment slit 18b, the attached steam jet nozzle 36 does not slip downward from the nozzle attachment slit 18b.

After the cup 37 is attached and the steam jet nozzle 36 is attached, the staff presses the cooking start button of the operation unit 107, and starts cooking (step ST4 shown in Figure 10).

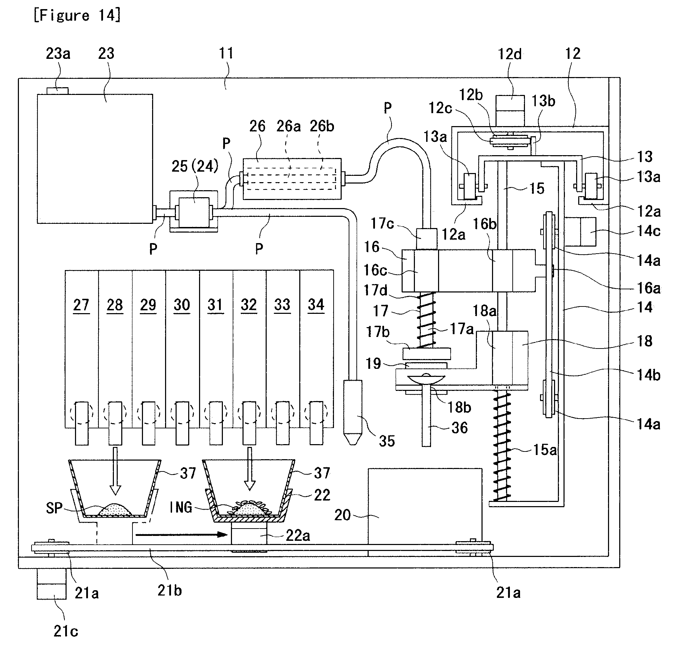

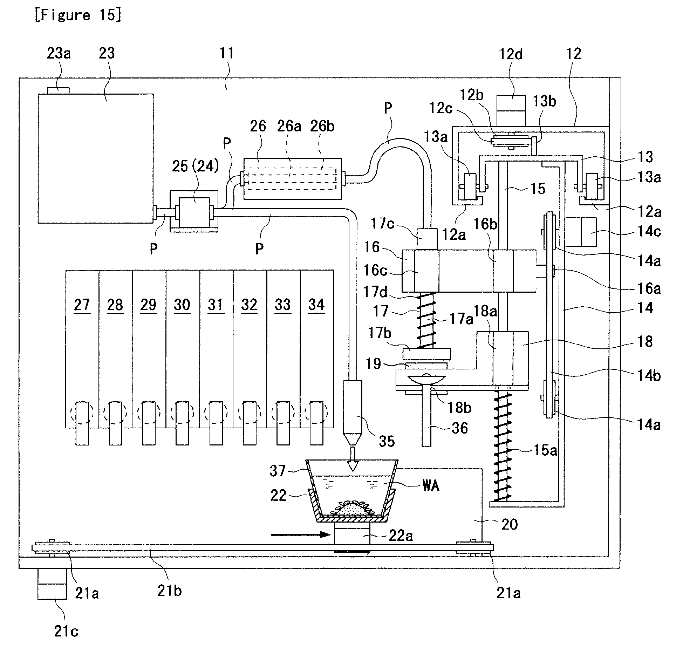

When the staff presses the cooking start button of the operation unit 107, as shown in Figure 14, the cup 37 is moved to and stops below the feed aperture (in the figure, the feed aperture 28a of the storage case 28) of the storage case storing the selected soup powder, and a predetermined amount of soup powder SP is put in the cup 37 from the supply aperture. Then, the cup 37 is moved to and stops below the feed aperture (in the figure, the 32a of the storage case 32) of the storage case for storing the selected ingredients, and a predetermined amount of ingredients ING is put in the cup 37 from the feed aperture (step ST5 shown in Figure 10, and step ST51 shown in Figure 11). Then, as shown in Figure 15, the cup 37 moves to and stops below the water feed nozzle 35, and a predetermined quantity of water WA is put in the cup 37 from the water feed nozzle 35 (step ST52 shown in Figure 11). Thus, the cup 37 stores necessary materials and water for generating soup, that is, unheated soup.

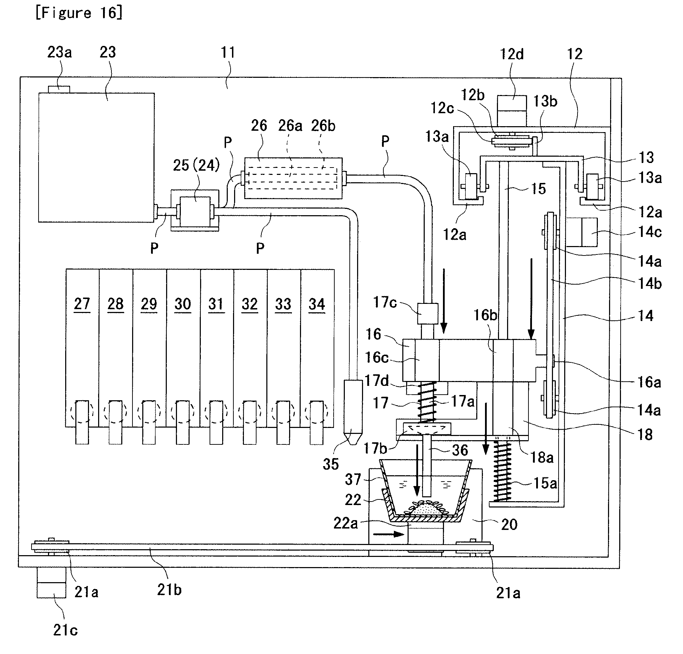

Then, as shown in Figure 16, the cup 37 moves to and stops below the steam jet nozzle 36, the second slider 16 falls by a predetermined distance, and the lower portion of the steam jet nozzle 36 is inserted into the unheated soup in the cup 37 (step ST53 shown in Figure 11) .

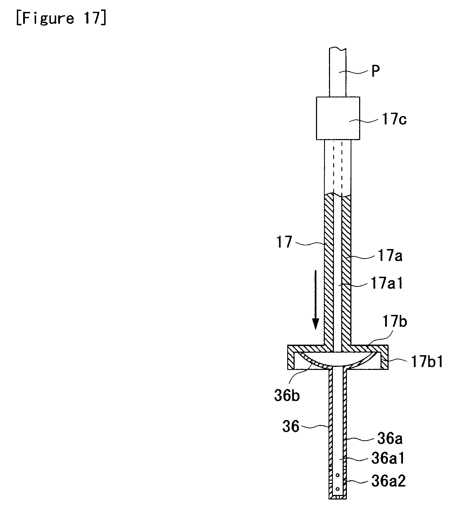

In the process of the second slider 16 falling by a predetermined distance, first, as shown in Figure 17, the coupling section 36b of the steam jet nozzle 36 is received by and coupled to the coupling section 17b of the steam feed pipe 17 which falls together with the second slider 16, and the spring member 17d is compressed faster than the spring member 15a, and the lower end of the second slider 16 abuts the upper end of the nozzle holder 18. After the abutting takes place, the nozzle holder 18 is pushed down by the second slider 16, and the nozzle holder 18 falls while compressing the spring member 15a, thereby inserting the lower portion of the steam jet nozzle 36 attached to the nozzle holder 18 into the unheated soup in the cup 37.

Since the coupling section 36b of the steam jet nozzle 36 is conical, it is bent when it is coupled firmly to the coupling section 17b of the steam feed pipe 17. In addition, the steam jet nozzle 36 and the steam feed pipe 17 can be in communication with each other although the center axis of the steam jet nozzle 36 is a little shifted from the center axis of the steam feed pipe 17.

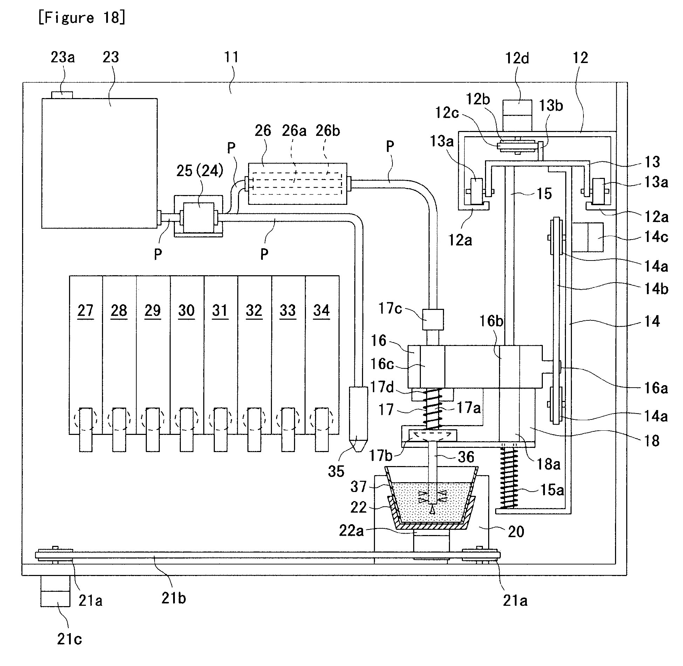

Then, as shown in Figure 18, the steam generated by the steam generator 26 is sent to the steam jet nozzle 36 through the steam feed pipe 17, jet into the unheated soup in the cup 37 from the plural jet holes 36a2 of the steam jet nozzle 36, thereby heating the unheated soup and stirring it (step ST54 shown in Figure 11).

At this time, since the steam jet time is predetermined depending on the number and types of materials selected by the operation unit 107 and the quantity of water, the heated soup SO at a predetermined temperature can be generated although the number and types of materials and the quantity of water are changed.

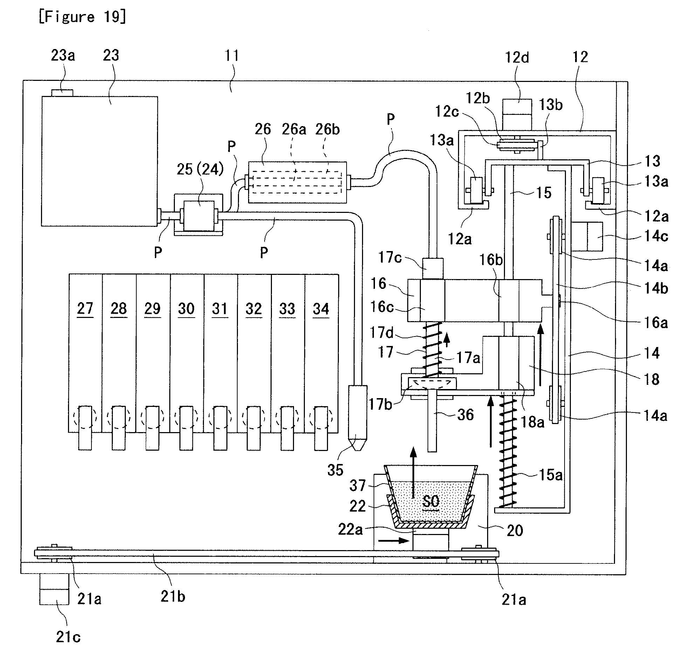

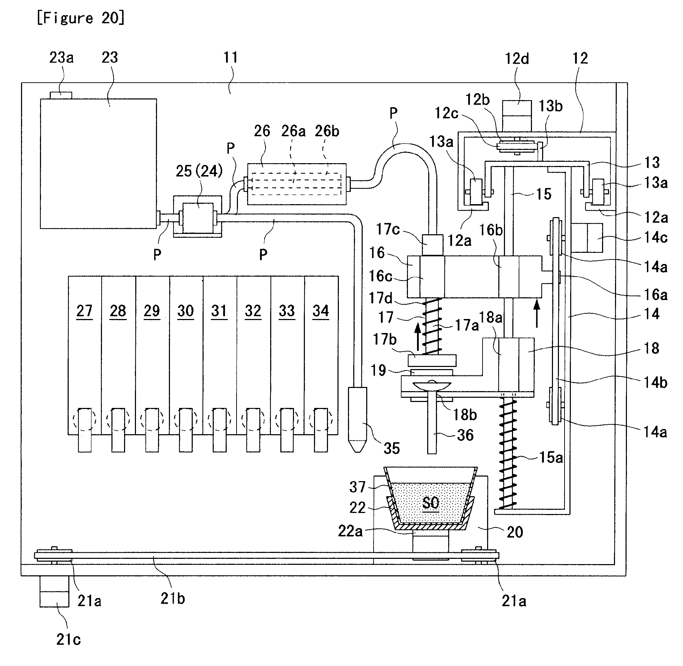

Then, as shown in Figures 19 and 20, the second slider 16 rises by a predetermined distance, and the steam jet nozzle 36 is pulled out of the heated soup SO in the cup 37 (step ST55 shown in Figure 11).

In the process of the second slider 16 rising by a predetermined distance, first, the steam jet nozzle 36 is pulled out of the cup 37 with the coupling section 17b of the steam feed pipe 17 coupled to the coupling section 36b of the steam jet nozzle 36 (see Figure 19), and then the coupling between the coupling section 17b of the steam feed pipe 17 and the coupling section 36b of the steam jet nozzle 36 is released (see Figure 20) .

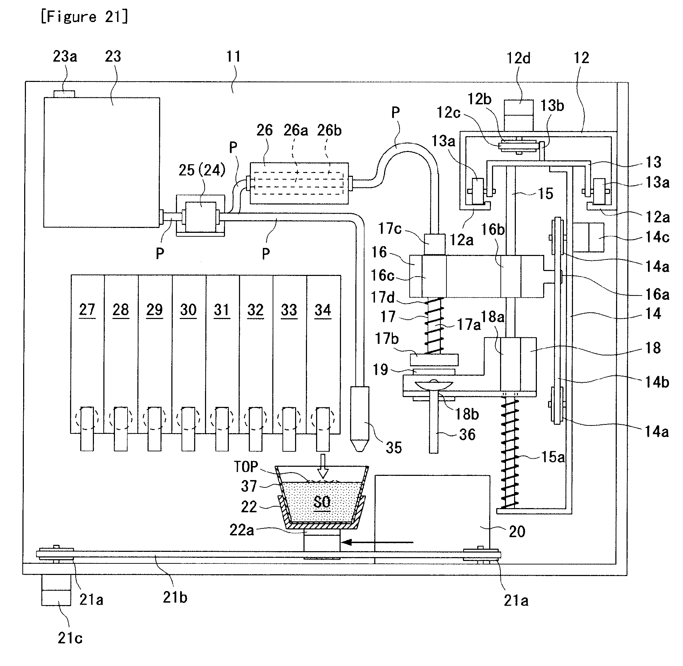

Then, as shown in Figure 21, the cup 37 moves to and stops below the feed aperture (in the figure, a feed aperture 34a of the storage case 34) of the storage case storing the selected topping material, and a predetermined amount of topping material TOP is put in the cup 37 from the feed aperture, and then splashed over the heated soup SO (step ST56 shown in Figure 11) .

Since the generation of the heated soup SO is completed at this point, the staff removes the cup 37 from the cup holder 22, attaches the cap (not shown in the attached drawings) as necessary, and serves the cup 37 to the customer.

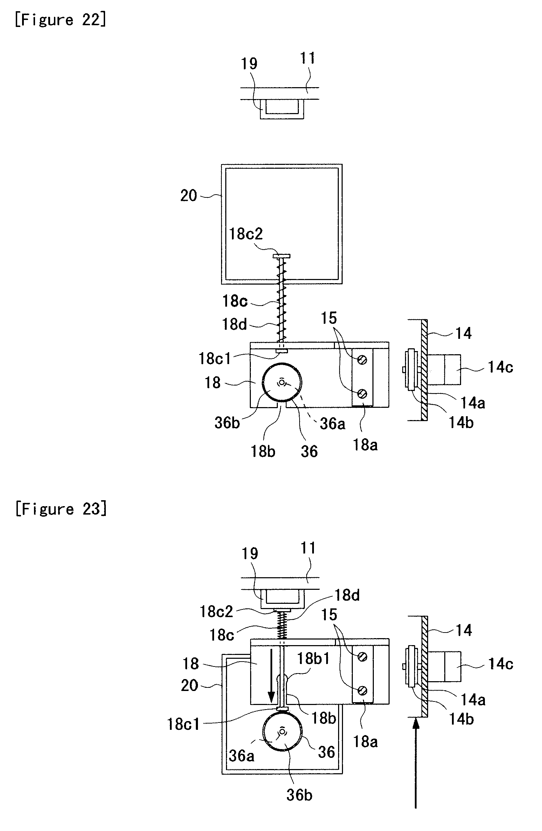

After the production of the soup is completed, the first slider 13 recedes together with the support plate 14 and the nozzle holder 18 from the position shown in Figure 22, and the steam jet nozzle 36 is removed from the nozzle holder 18 and collected as shown in Figure 23 (step ST57 shown in Figure 11).

In the process of the first slider 13 receding by a predetermined distance, the diameter expansion section 18c2 behind the nozzle push pin 18c of the nozzle holder 18 receding together with the first slider 13 abuts the pressure plate 19. After the abutting takes place, the spring member 18d is compressed and the diameter expansion section 18c1 before the nozzle push pin 18c relatively advances, the diameter expansion section 18c1 pushes the steam jet nozzle 36 forward, thereby pushing the straight pipe section 36a of the steam jet nozzle 36 out of the aperture of the nozzle attachment slit 18b. As described above, the steam jet nozzle 36 has the straight pipe section 36a inserted into the circular section 18b1 of the nozzle attachment slit 18b, and has the coupling section 36b supported by the ridge of the circular section 18b1. Therefore, if the straight pipe section 36a pushes the steam jet nozzle 36 forward by the force in the extent of passing through the nozzle attachment slit 18b, then the straight pipe section 36a of the steam jet nozzle 36 advances along the nozzle attachment slit 18b and can easily be pushed out of the aperture.

That is, the nozzle push pin 18c abuts the steam jet nozzle 36 when the nozzle holder 18 moves behind from the nozzle coupling position, and pushes the steam jet nozzle 36 out of the aperture of the nozzle attachment slit 18b. Since the collection box 20 is arranged below the position to which the steam jet nozzle 36 is pushed out of the aperture of the nozzle attachment slit 18b, the steam jet nozzle 36 pushed out of the aperture of the nozzle attachment slit 18b drops into the collection box 20 and is collected therein.

Afterwards, the first slider 13 and the cup holder 22 are returned to the initial positions as shown in Figure 1 (step ST6 shown in Figure 10). Subsequently, the heated soup SO is generated in the similar procedure as described above.

Thus, according to the liquid food heating apparatus described above, it is possible to automatically detach and discard the used steam jet nozzle 36 attached to the nozzle holder 18 from the nozzle holder 18 after releasing the coupling between the steam jet nozzle 36 and the steam feed pipe 17. Therefore, there is no need to use the nozzle cleaning mechanism which uesd in the liquid food heating apparatus of the type that repeatedly uses the steam jet nozzle, and the used steam jet nozzle 36 can be discarded without fail. In addition, since a predetermined steam jet nozzle 36 replaces the used nozzle, the variances of the style of inserting the nozzle into the cup 37 can be prevented, thereby stably heating unheated soup each time. Furthermore, since the steam jet nozzle 36 can be adopted if it can be attached to and detached from the nozzle holder 18, other steam jet nozzles having different steam jetting styles can be selectively used depending on the type etc. of unheated soup to be heated.

In addition, since the nozzle attachment slit 18b having one end aperture to and from which the steam jet nozzle 36 can be attached and detached is provided for the nozzle holder 18, the steam jet nozzle 36 can be easily attached to the nozzle holder 18, and the used steam jet nozzle 36 attached to the nozzle holder 18 can be easily and correctly discarded by pushing it out of the aperture of the nozzle attachment slit 18b.

Furthermore, the used steam jet nozzle 36 pushed out of the aperture of the nozzle attachment slit 18b is dropped into and collected in the collection box 20. Therefore, the waste steam jet nozzle 36 can be collected without getting the hands of the staff dirty. The collected steam jet nozzle 36 can be discarded, but can also be collectively cleaned for reuse and cost-saving.

Furthermore, necessary materials for generating soup can be stored in the plurality of storage cases 27 to 34 for the respective types, and the material selection buttons 107a of the operation unit 107 can be appropriately pressed to select the material, thereby automatically putting the materials depending on the order contents with water in the empty cup 37 and preparing the unheated soup. Thus, a number of types of soup can be produced and served depending on the needs of customers.

In addition, in the description above, in the process of the nozzle holder 18 to which the steam jet nozzle 36 is attached is moved from the nozzle coupling position to the recessed position, the steam jet nozzle 36 is pushed out of the aperture of the nozzle attachment slit 18b by the nozzle push pin 18c. However, if the nozzle push pin 18c can be solely advanced is adopted, the steam jet nozzle 36 can be pushed out of the aperture of the nozzle attachment slit 18b by advancing the nozzle push pin 18c without the recession of the nozzle holder 18.

In the description above, the collection box 20 for collecting the used steam jet nozzle 36 is arranged at the recessed position separate from the nozzle coupling position, however, if a shooting plate (not shown in the attached drawings) for carrying the steam jet nozzle 36 that falls from the nozzle holder 18 is used, the collection box 20 can be arranged at the position different from the above-mentioned position.

Furthermore, in the description above, the cup 37 is manually attached to the cup holder 22. However, each cup 37 can be automatically attached to the cup holder 22 by installing a cup feeder capable of feeding each cup 37.

Additionally, in the description above, the steam jet nozzle 36 is manually attached to the nozzle attachment slit 18b of the nozzle holder 18, but a nozzle feeder capable of feeding each steam jet nozzle 36 and a nozzle attacher capable of attaching each steam jet nozzle 36 to the nozzle attachment slit 18b of the nozzle holder 18 can be installed to automatically attach the steam jet nozzle 36 to the nozzle attachment slit 18b of the nozzle holder 18.

Furthermore, in the description above, a cap is manually attached to the cup 37 after producing soup, but a cap feeder capable of feeding each cap and a cap attacher capable of attaching a cap to the cup 37 can be installed to automatically attach a cap to the cup 37 after producing soup.

In addition, in the description above, soup powder as soup base is stored by type in the storage cases 27 to 29 and dry ingredients are stored in the storage cases 30 to 32 by type, but soup powder with ingredients corresponding to the prepared menu can be stored by type in the storage cases 27 to 32 and the menu can be selected on the operation unit 107 to put the soup powder with ingredients corresponding to the menu selected on the operation unit 107 can be put into the cup 37 from a predetermined storage case. It is obvious that the number of storage cases can be appropriately increased or decreased depending on the type of necessary materials, the menu, etc.

In the description above, the liquid food heating apparatus for producing soup is shown, but other types of liquid food to be heated, for example, miso soup, pork soup, chowder, sweet bean soup, etc. can be produced and served by changing the materials stored in the storage cases.

### [Second Embodiment]

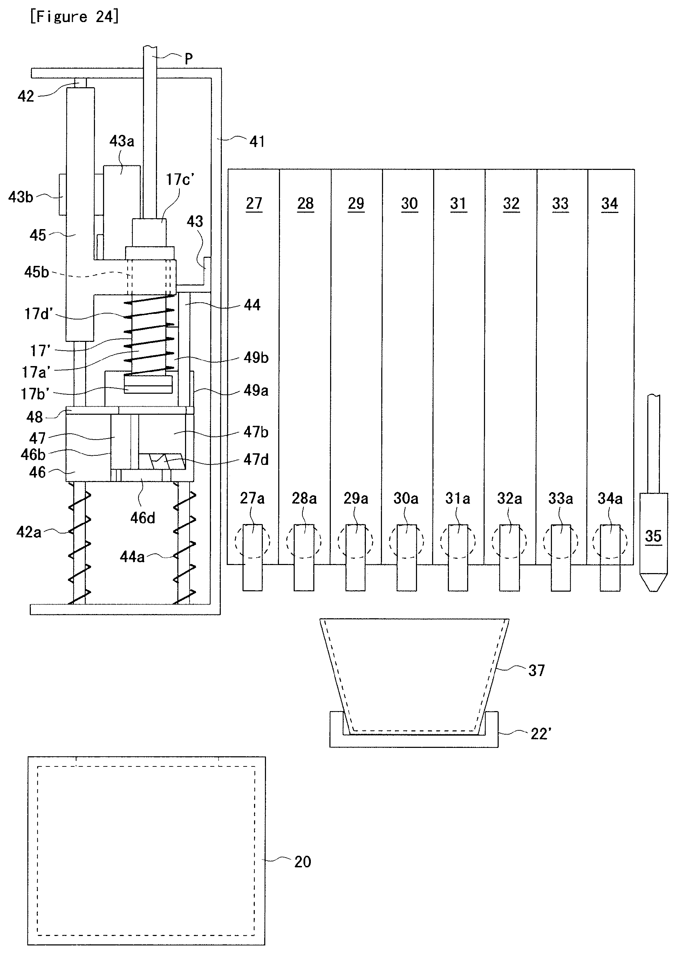

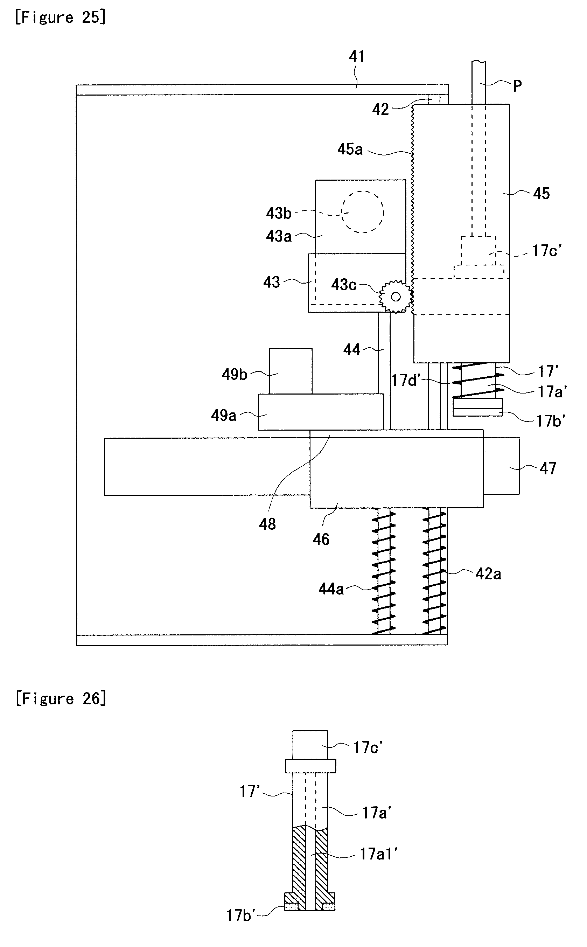

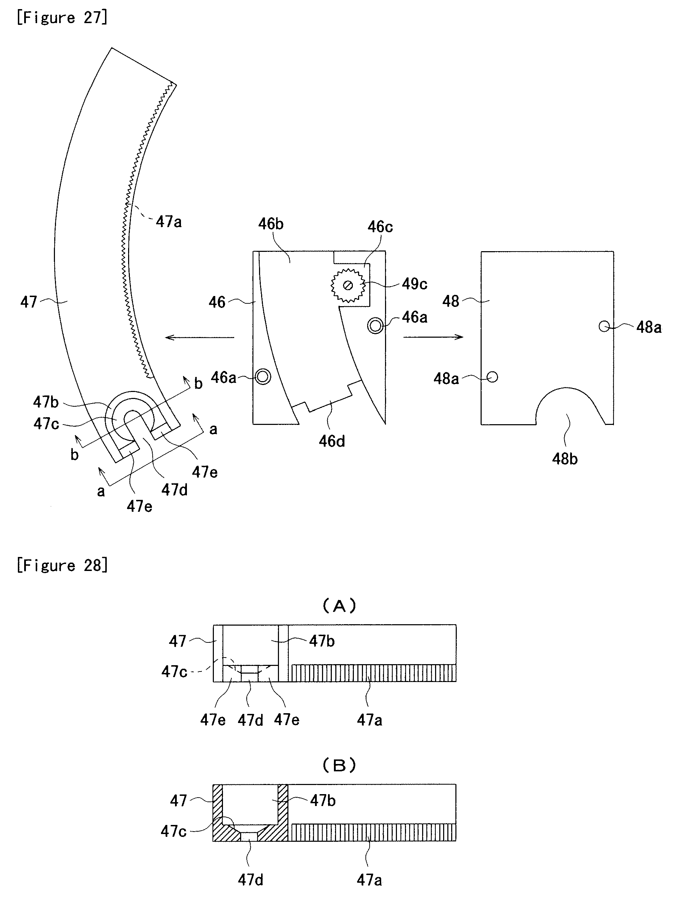

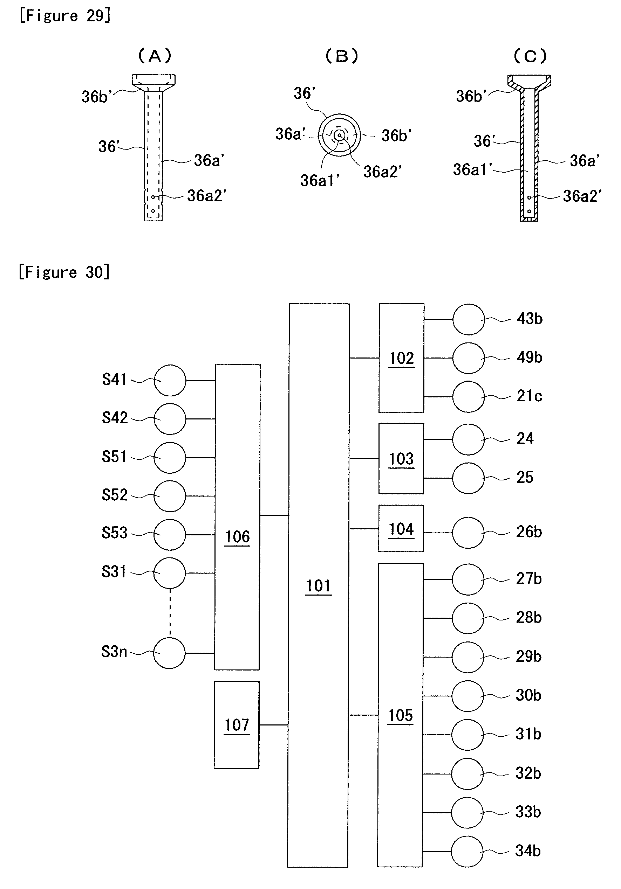

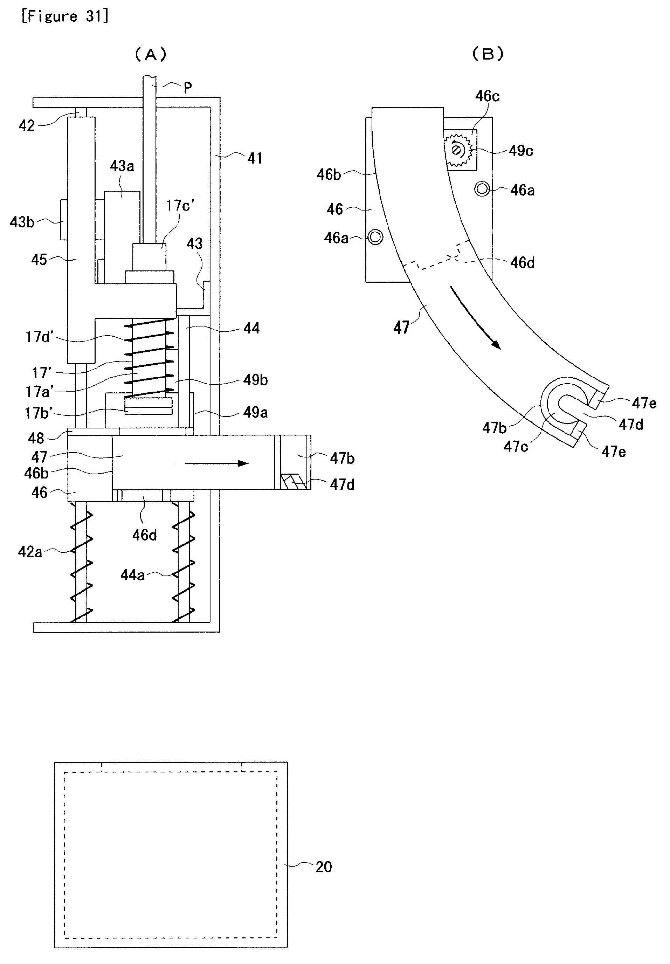

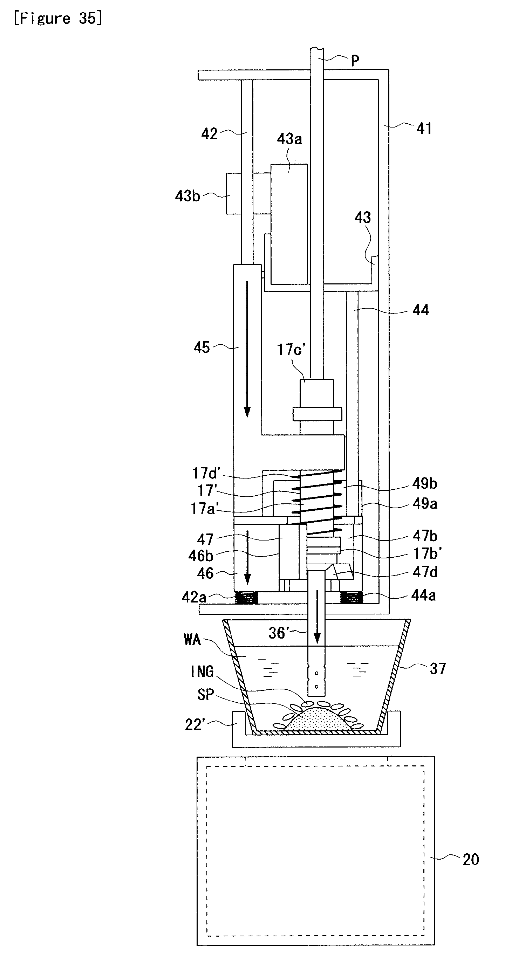

Figures 24 to 28 show the second embodiment of the present invention. Figure 24 is a front view of the main part of the liquid food heating apparatus. Figure 25 is a side view shown in Figure 24. Figure 26 is a cutaway view of the main part of the steam feed pipe shown in Figure 24. Figure 27 is a top view of the holder guide, the nozzle holder, and the cover plate shown in Figure 24. Figure 28 is a view from the arrow lines a-a and b-b shown in Figure 27. Figure 29 is a side view, a top view, and a sectional view of the steam jet nozzle. Figure 30 shows the control system provided for the liquid food heating apparatus shown in Figure 24. Figures 31 to 38 are explanatory views of the operation of the liquid food heating apparatus.

In the description below, for convenience of descriptions, the front side, the back side, the left side, and the right side shown in Figure 24 are respectively defined as the front, the back, the left, and the right. In Figures 24 to 28, the configuration as in the first embodiment is omitted as much as possible, and the same components in the figures are assigned the same reference numerals.

First, the mechanism of the liquid food heating apparatus shown in Figure 24 is described below.

Figures 24 to 29 show a steam feed pipe 17', a collection box 20, a cup holder 22', the storage cases 27 to 34, the water feed nozzle 35, a steam jet nozzle 36', the frame 41, the guide rod 42, the support plate 43, the guide rod 44, the up-and-down slider 45, the holder guide 46, the nozzle holder 47, and the cover plate 48.

An important differences of the liquid food heating apparatus from the liquid food heating apparatus shown in Figure 1 are that the shapes of the steam feed pipe 17' , the cup holder 22', and the steam jet nozzle 36' are changed, and the mechanism for moving up and down the steam feed pipe 17' and the nozzle holder 47 and the mechanism for moving back and forth the nozzle holder 47 are changed, the arrangement positions of the mechanisms are changed to the left of the storage cases 27 to 34, and the arrangement position of the collection box 20 is changed to below the nozzle coupling position.

The guide rod 42 is provided between the upper wall and the bottom wall of the frame 41, and a spring member 42a that supports a holder guide 46 is provided on the lower portion of the guide rod 42.

The support plate 43 is provided on the right wall of the frame 41. A decelerator 43a is provided on the bottom wall of the support plate 43, and a first motor 43b is connected to the input axis of the decelerator 43a, and a first pinion 43c is connected to the output axis. The guide rod 44 is provided between the bottom wall of the support plate 43 and the bottom wall of the frame 41, and the spring member 42a for supporting the holder guide 46 is provided on the lower portion of the guide rod 42.

The entire up-and-down slider 45 is T-shaped. The rack 45a engaged with the first pinion 43c is provided in up and down direction on the back surface of the left side of the up-and-down slider 45. The bush (not shown in the attached drawings) for guide rod 42 is provided at the left of the up-and-down slider 45. The guide rod 42 passes through the bush. That is, the up-and-down slider 45 can be moved up and down by the rotation of the first pinion 43c by the first motor 43b. The bush 45b for the steam feed pipe 17' is further provided at the right of the up-and-down slider 45.

As shown in Figure 26, the steam feed pipe 17' includes a cylindrical straight pipe section 17a', a cylindrical coupling section 17b' integrally formed with the straight pipe section 17a' at the lower end of the straight pipe section 17a', and a cylindrical connecting section 17c' provided at the upper end of the straight pipe section 17a'. The diameters of the coupling section 17b' and the connecting section 17c' are larger than the diameter of the straight pipe section 17a'. The straight pipe section 17a' and the coupling section 17b' include an inside hole 17a1' as a path of steam. At the lower end of the coupling section 17b', a grommet (not assigned a reference numeral) made of synthetic rubber etc. to improve the tightness between the steam jet nozzle 36' and the coupling section 36b' is provided. The straight pipe section 17a' of the steam feed pipe 17' is passed through the bush 45b of the up-and-down slider 45, and the steam feed pipe 17' is urged downward by a spring member 17d' interposed between the lower end of the up-and-down slider 45 and the coupling section 17b'. The urge of the spring member 17d' is smaller than the sum of the urges of the spring members 42a and 44a. The fall position of the steam feed pipe 17' with respect to the up-and-down slider 45 is regulated by the connecting section 17c' abutting the upper end of the up-and-down slider 45. That is, the steam feed pipe 17' can rise with respect to the up-and-down slider 45 by applying upward force stronger than the urge of the spring member 17d'.

The holder guide 46 is rectangular parallelpiped, and includes two bushes 46a for the guide rods 42 and 44. In the upper surface of the holder guide 46, a guide groove 46b for the nozzle holder 47 is provided, and a nozzle push chip 46d is provided at the front end of the bottom wall of the guide groove 46b. The left and right internal walls of the guide groove 46b are curved with predetermined curvatures, and the centers of the curvatures of the internal walls match each other. A cavity 46c for housing the second pinion 49c is provided in communication with the guide groove 46b for the holder guide 46.

The nozzle holder 47 has matching left and right walls on the inside left and right walls of the guide groove 46b, and has the thickness substantially equal to the depth of the guide groove 46b. A rack 45a engaged with the second pinion 49c is provided at the lower portion of the right wall of the nozzle holder 47. That is, the nozzle holder 47 can move back and forth along the holder guide 46 by the rotation of the second pinion 49c by the second motor 49b.

Furthermore, a cavity 47b of the aperture at the front end in the U-shaped when viewed from above is provided at the front end portion of the nozzle holder 47, and a conical cavity 47c is provided at the bottom of the cavity 47b. At the front end portion of the nozzle holder 47, the nozzle attachment slit 47d as a one end aperture from the front end to the center of the conical cavity 47c is provided. Furthermore, a slope 47e tilting from the cavity 47b down toward the front is provided on both sides of the aperture of the nozzle attachment slit 47d of the nozzle holder 47. The width of the cavity 47b is larger than the diameter of the coupling section 17b' of the steam feed pipe 17', and the diameter of the conical cavity 47c is substantially equal to the diameter of the coupling section 17b' of the steam feed pipe 17'. The width of the nozzle attachment slit 47d is substantially equal to the diameter of the straight pipe section 36a' of the steam jet nozzle 36', and smaller than the diameter of the conical cavity 47c. The shape of the conical cavity 47c formed at the ridge of the innermost portion of the nozzle attachment slit 47d matches the shape of the lower surface of the coupling section 36b' of the steam jet nozzle 36'.

The cover plate 48 is to block the guide groove 46b after the nozzle holder 47 is engaged in the guide groove 46b of the holder guide 46, and attached to the holder guide 46 by a screw not shown in the attached drawings. Two holes 48a are provided for the cover plate 48 corresponding to each of the bushes 46a of the holder guide 46. Furthermore, a notch 48b is provided for exposure of the cavity 47b of the nozzle holder 47 at the front end portion of the cover plate 48.

A section configured by engaging the nozzle holder 47 in the guide groove 46b of the holder guide 46 and attaching the nozzle holder 47 to the holder guide 46 has the guide rods 42 and 44 passing through each of the bushes 46a of the holder guide 46, and supported by the spring members 42a and 44a at its lower surface. That is, the unit including the nozzle holder 47 can fall by applying downward force stronger than the urges of the spring members 42a and 44a.

The section of the cup holder 22' has a squared U-shape longitudinal section, and connected to the endless belt 21b through the bracket 22a as with the liquid food heating apparatus shown in Figure 1. That is, the cup holder 22' can be moved from side to side by the rotation of the endless belt 21b by the third motor 21c.

As shown in Figure 29, the steam jet nozzle 36' is provided with the cylindrical straight pipe section 36a' and the cylindrical coupling section 36b' having a larger diameter than the straight pipe section 36a' and integrally formed with the straight pipe section 36a' at the upper end of the straight pipe section 36a' , and the shape of the lower surface of the coupling section 36b' is conical. The straight pipe section 36a' and the coupling section 36b' have an inside hole 36a1' as a path of steam, and a plurality of jet holes 36a2' at the lower circumference surface and the lower surface. The entire steam jet nozzle 36' is made of plastics.

Next, the control system provided for the liquid food heating apparatus shown in Figure 24 is described below with reference to Figure 30.

Figure 30 shows a controller 101, a first driver 102 for a motor, a second driver 103 for a pump, a third driver 104 for a heater, a fourth driver 105 for a motor, a detector 106, and an operation unit 107.

The controller 101 has a microcomputer built-in, and its memory stores, in addition to the program for performing the process shown in Figures 10 and 11, various data about the materials stored in each of the storage cases 27 to 34 and the heating time, etc. corresponding to the selected materials.

The first driver 102 for motors transmits a drive signal to the first to third motors 43b, 49b, and 21c according to the control signal from the controller 101. The first and second motors 43b and 49b are DC motors, and the third motor 21c is a DC motor with a decelerator.

The second driver 103 for a pump transmits a drive signal to the first and second pumps 24 and 25 according to the control signal from the controller 101. The first and second pumps are the type of pumps called electromagnetic pump.

The third driver 104 for a heater transmits a drive signal to the electric heater 26b of the steam generator 26 according to the control signal from the controller 101.

To the detector 106, connected are two sensors S41, S41 for detecting the stop position in up and down direction with respect to the up-and-down slider 45, three sensors S51, S52, S53 for detecting the stop position (nozzle coupling position, advance position, and recessed position) in back and forth direction with respect to the nozzle holder 47, and N sensors S31 to S3n for detecting the stop position from side to side with respect to the cup holder 22'. Each sensor is configured by a microswitch etc. and a sensing signal of each sensor is transmitted to the controller 101 through the detector 106.

Next, the operation of the liquid food heating apparatus shown in Figure 24 is described with reference to Figures 31 to 38 by citing Figures 10 and 11.

The liquid food heating apparatus shown in Figure 24 is installed in a restaurant, a fast food restaurant, etc. and the operation of the apparatus is performed by the staff of the restaurant based on the order contents. A customer has two ways of placing an order, that is, a method of ordering specific soup from a prepared menu, and a method of ordering the original soup by specifying favorite materials.

After receiving the order, the staff presses a selection start button of the operation unit 107, then appropriately presses the material selection buttons 107a, and selects the materials according to ordered contents. In the former selecting method, the materials can be selected from a predetermined recipe for each soup. In the latter selecting method, the materials can be selected depending on the order (steps ST1 and ST2 shown in Figure 10). The selected materials can be confirmed on the indicator 107c. If an erroneous input is made during selecting the materials, the staff can press a cancel button, and the operation is started again.

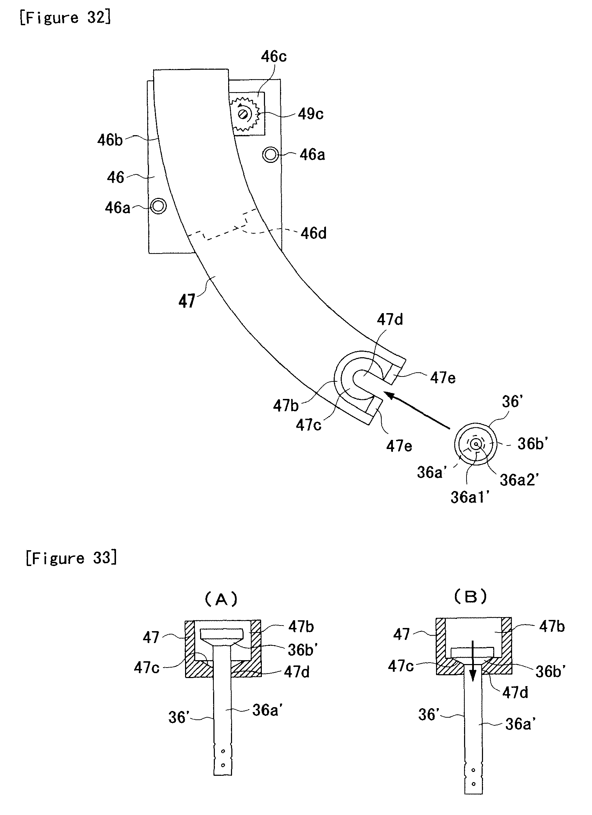

After the materials are selected, the staff presses a selection end button of the operation unit 107 and then the indicator 107c displays the message "Set cup and nozzle", and the nozzle holder 47 moves to the advance position and stops as shown in Figures 31 (A) and 31(B). The staff confirms the message, attaches the cup 37 to the cup holder 22' as shown in Figure 24, and attaches the steam jet nozzle 36' to the nozzle attachment slit 47d of the nozzle holder 47 as shown in Figures 32, 33(A), and 33(B) (step ST3 shown in Figure 10) .

The attachment of the steam jet nozzle 36' can be performed by one of the method of inserting the straight pipe section 36a' of the steam jet nozzle 36' from the front to the nozzle attachment slit 47d, and engaging the conical shape portion of the coupling section 36b' in the conical cavity 47c, and the method of inserting the straight pipe section 36a' of the steam jet nozzle 36' from above to the innermost portion of the nozzle attachment slit 47d and engaging the conical shape portion of the coupling section 36b' in the conical cavity 47c. Since the steam jet nozzle 36' is attached in the state of being supported with the straight pipe section 36a' of the steam jet nozzle 36' inserted into the nozzle attachment slit 47d and the conical shape portion of the coupling section 36b' engaged in the conical cavity 47c, the steam jet nozzle 36' after the attachment does not easily move forward along the nozzle attachment slit 47d. Furthermore, since the diameter of the coupling section 36b' of the steam jet nozzle 36' is larger than the width of the nozzle attachment slit 47d, the attached steam jet nozzle 36' does not slip downward from the nozzle attachment slit 47d.

After the cup 37 is attached and the steam jet nozzle 36' is attached, the staff presses the cooking start button of the operation unit 107, and makes cooking start (step ST4 shown in Figure 10).

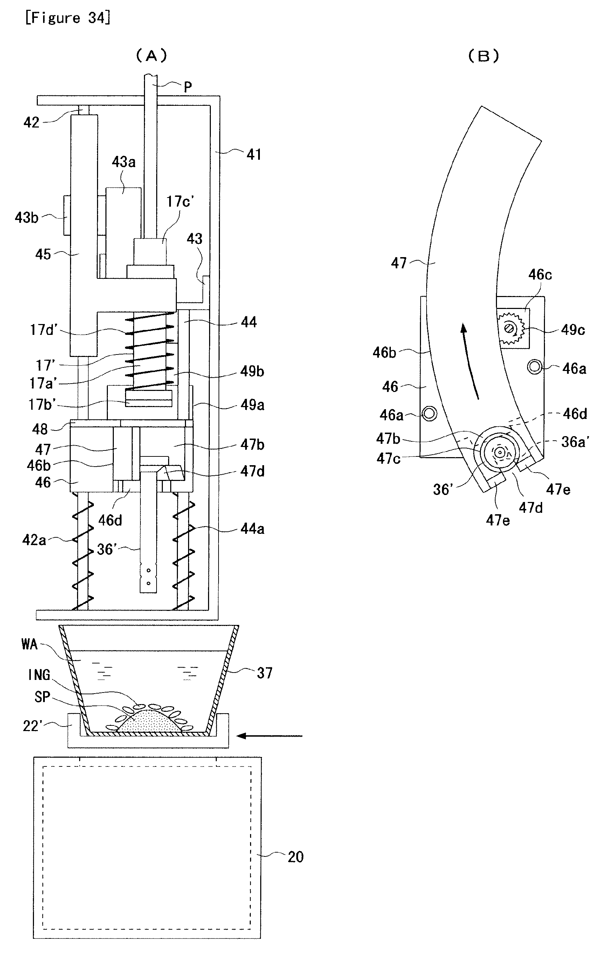

When the staff presses the cooking start button of the operation unit 107, the nozzle holder 47 at the advance position recedes to and stops at the nozzle coupling position (where the center axis of the steam jet nozzle 36' and the center axis of the steam feed pipe 17 matches) as shown in Figures 34 (A) and 34 (B).

Similar to Figures 14 and 15, the cup 37 is moved to and stops below the feed aperture of the storage case storing the selected soup powder, and a predetermined amount of soup powder SP is put in the cup 37 from the supply aperture. Then, the cup 37 is moved to and stops below the feed aperture of the storage case for storing the selected ingredients, and a predetermined amount of ingredients ING is put in the cup 37 from the feed aperture (step ST5 shown in Figure 10, and steam 51 shown in Figure 11). Then, the cup 37 moves to and stops below the water feed nozzle 35, and a predetermined quantity of water WA is put in the cup 37 from the water feed nozzle 35 (step ST52 shown in Figure 11). Thus, the cup 37 stores necessary materials and water for producing soup, that is, prepared unheated soup.

Then, as shown in Figures 34 (A) and 34 (B), the cup 37 moves to and stops below the steam jet nozzle 36', the up-and-down slider 45 falls by a predetermined distance, and the lower portion of the steam jet nozzle 36' is inserted into the unheated soup in the cup 37 (step ST53 shown in Figure 11).

In the process of the up-and-down slider 45 falling by a predetermined distance, first, the coupling section 36b' of the steam jet nozzle 36' abuts and is coupled to the coupling section 17b' of the steam feed pipe 17' which falls together with the up-and-down slider 45, and then the spring member 17d' is compressed faster than the spring members 42a and 44a, and the lower end of the up-and-down slider 45 abuts the upper end of the unit including the nozzle holder 47. After the abutting takes place, the unit including the nozzle holder 47 is pushed down by the up-and-down slider 45, and the unit falls while compressing the spring members 42a and 44a, thereby inserting the lower portion of the steam jet nozzle 36' attached to the nozzle holder 47 into the unheated soup in the cup 37.

Since a grommet is provided at the lower end portion of the coupling section 17b' of the steam feed pipe 17' , the coupling section 17b' closely contacts the coupling section 36b' of the steam jet nozzle 36' through the grommet when they are coupled.

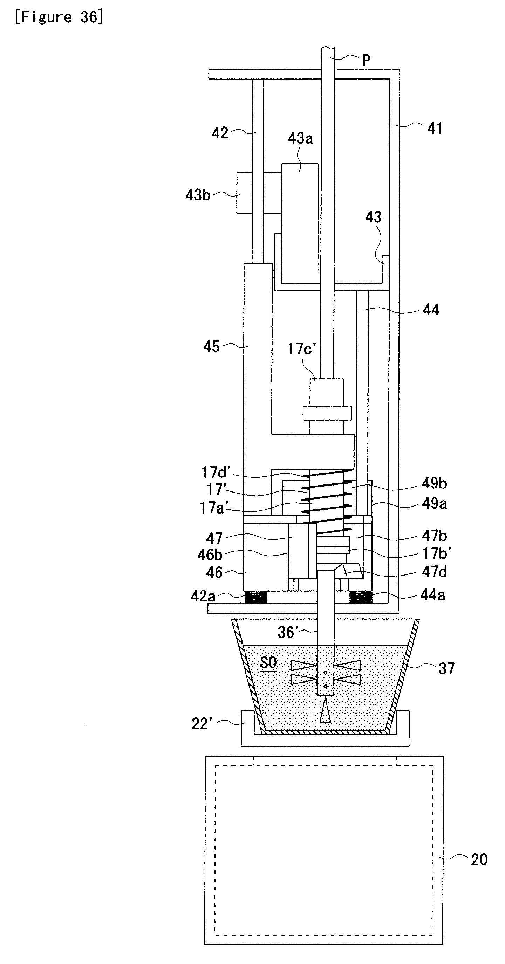

Then, as shown in Figure 36, the steam generated by the steam generator 26 is sent to the steam jet nozzle 36' through the steam feed pipe 17, jet into the unheated soup in the cup 37 from the plural jet holes 36a2' of the steam jet nozzle 36', thereby heating the unheated soup and stirring it (step ST54 shown in Figure 11) .

At this time, since the steam jet time is predetermined depending on the number and types of materials selected by the operation unit 107 and the quantity of water, the heated soup SO at a predetermined temperature can be produced although the number and types of materials and the quantity of water are changed.

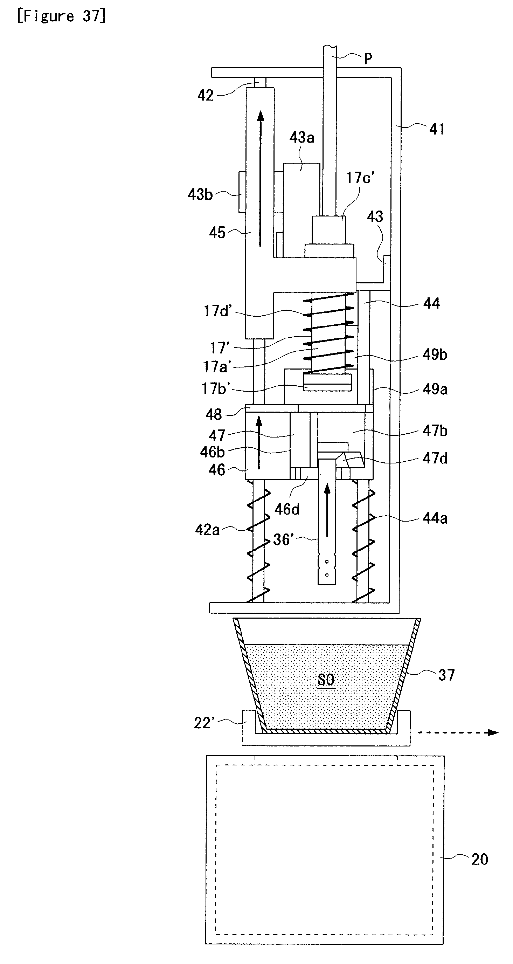

Then, as shown in Figure 37, the up-and-down slider 45 rises by a predetermined distance, and the steam jet nozzle 36' is pulled out of the heated soup SO in the cup 37 (step ST55 shown in Figure 11).

In the process of the up-and-down slider 45 rising by a predetermined distance, first, the steam jet nozzle 36' is pulled out of the cup 37 with the coupling section 17b' of the steam feed pipe 17' coupled to the coupling section 36b' of the steam jet nozzle 36', and then the coupling between the coupling section 17b' of the steam feed pipe 17' and the coupling section 36b' of the steam jet nozzle 36' is released.

Then, the cup 37 moves to and stops below the feed aperture of the storage case for storing the selected topping material, and a predetermined amount of topping material TOP is put in the cup 37 from the feed aperture, and then splashed over the heated soup SO (step ST56 shown in Figure 11).

Since the production of the heated soup SO is completed at this point, the staff removes the cup 37 from the cup holder 22', attaches the cap (not shown in the attached drawings) as necessary, and serves the cup 37 to the customer.

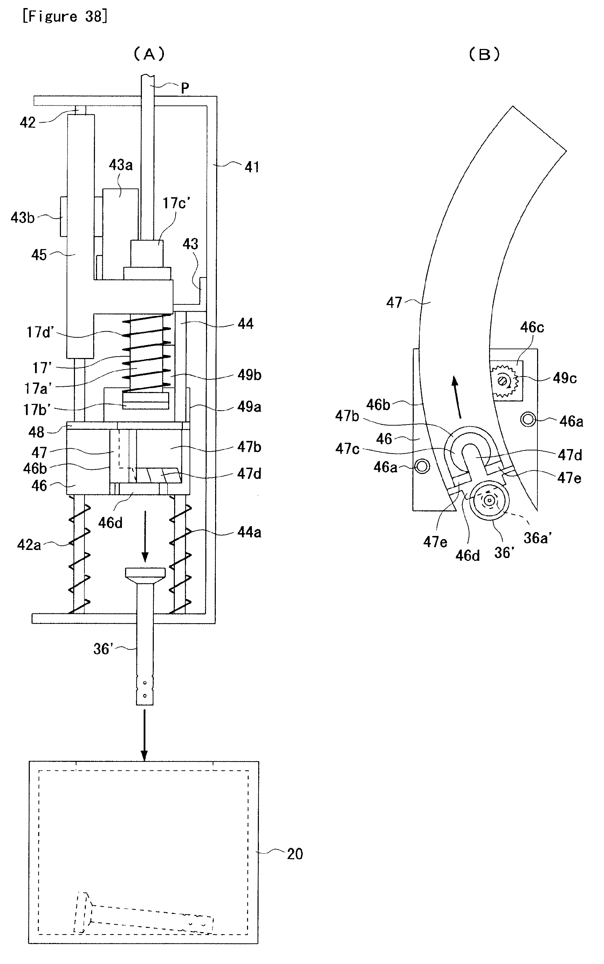

After the production of the soup is completed, as shown in Figures 38(A) and 38(B), the nozzle holder 47 recedes from the nozzle coupling position to the recessed position, and the steam jet nozzle 36' is removed from the nozzle holder 18 and collected (step ST57 shown in Figure 11).

In the process of the nozzle holder 47 receding from the nozzle coupling position by a predetermined distance, the straight pipe section 36a' of the steam jet nozzle 36' attached to the nozzle attachment slit 47d first abuts the nozzle push chip 46d of the holder guide 46. After the abutting takes place, the steam jet nozzle 36' is pushed forward, and the straight pipe section 36a' of the steam jet nozzle 36' is pushed out of the aperture of the nozzle attachment slit 47d. As described above, since the steam jet nozzle 36' is attached such that it is supported by the straight pipe section 36a' of the steam jet nozzle 36' inserted into the nozzle attachment slit 47d, and the conical shape portion of the coupling section 36b' engaged in the conical cavity 47c, the straight pipe section 36a' of the steam jet nozzle 36' can be advanced along the nozzle attachment slit 47d by pushing forward the steam jet nozzle 36' by the force in the extent of the conical shape portion of the coupling section 36b' pushing up the conical cavity 47c, thereby easily pushing it out of the aperture.

That is, as can be seen in Figure 34(B), since the nozzle push chip 46d is positioned to face the straight pipe section 36a of the steam jet nozzle 36' attached to the nozzle holder 18 at the nozzle coupling position immediately behind the straight pipe section 36a with a small gap, the nozzle push chip 46d abuts the steam jet nozzle 36' immediately after the nozzle holder 18 starts recession from the nozzle coupling position, and pushes the steam jet nozzle 36' out of the aperture of the nozzle attachment slit 47d. Since the collection box 20 is arranged below the nozzle coupling position, the steam jet nozzle 36' pushed out of the aperture of the nozzle attachment slit 47d falls in the collection box 20, and is then collected.

Afterwards, the nozzle holder 47 and the cup holder 22' are returned to the initial positions in the state shown in Figure 24 (step ST6 shown in Figure 10). Subsequently, the heated soup SO is generated in the similar procedure as described above.

Thus, according to the liquid food heating apparatus described above, it is possible to automatically detach and discard the used steam jet nozzle 36' attached to the nozzle holder 47 from the nozzle holder 47 after releasing the coupling between the steam jet nozzle 36' and the steam feed pipe 17'. Therefore, there is no need to use the nozzle cleaning mechanism which uesd in the liquid food heating apparatus of the type that repeatedly uses the steam jet nozzle, and the used steam jet nozzle 36' can be discarded without fail. In addition, since a prepared steam jet nozzle 36' replaces the used nozzle, the variances of the style of inserting the nozzle into the cup 37 can be prevented, thereby stably heating unheated soup each time. Furthermore, since any steam jet nozzle 36' can be adopted as long as it can be attached to and detached from the nozzle holder 47, other steam jet nozzles having different steam jetting styles can be selectively used depending on the type etc. of unheated soup to be heated.

In addition, since the nozzle attachment slit 47d having one end aperture to and from which the steam jet nozzle 36' can be attached and detached is provided for the nozzle holder 47, the steam jet nozzle 36' can be easily attached to the nozzle holder 47, and the used steam jet nozzle 36' attached to the nozzle holder 47 can be easily and correctly discarded by pushing it out of the aperture of the nozzle attachment slit 47d.

Furthermore, the used steam jet nozzle 36' pushed out of the aperture of the nozzle attachment slit 47d is dropped into and collected in the collection box 20. Therefore, the waste steam jet nozzle 36' can be collected without making the hands of the staff dirty. The collected steam jet nozzle 36' can be discarded, but can also be collectively cleaned for reuse and cost-cutting.

Furthermore, the collection box 20 for collecting the used steam jet nozzle 36' is arranged below the nozzle coupling position, and the steam jet nozzle 36' attached to the nozzle attachment slit 47d of the nozzle holder 47 is pushed out of the aperture of the nozzle attachment slit 47d immediately after the nozzle holder 18 starts recession from the nozzle coupling position, the time required to discard the steam jet nozzle 36' can be shorter than in the case of the liquid food heating apparatus shown in Figure 1, a total cooking time can be shortened, and it is not necessary to move the used dirty steam jet nozzle 36' for collection with the collection box 20. Therefore, there is no trouble of soiling the apparatus due to a liquid dropping from the steam jet nozzle 36'.

Furthermore, necessary materials for generating soup can be stored in the plurality of storage cases 27 to 34 for the respective types, and the material selection buttons 107a of the operation unit 107 can be appropriately pressed to select the material, thereby automatically putting the materials depending on the order contents together with water into the empty cup 37 and preparing the unheated soup. Thus, a number of types of soup can be produced and served depending on the needs of customers.

In addition, in the description above, in the process of the nozzle holder 47 to which the steam jet nozzle 36' is attached is moved from the nozzle coupling position to the recessed position, the steam jet nozzle 36' is pushed out of the aperture of the nozzle attachment slit 47d by the nozzle push chip 46d of the holder guide 46. However, if the nozzle push chip 46d that can be solely advanced is adopted, the steam jet nozzle 36' can be pushed by the nozzle push chip 46d by advancing the nozzle push chip 46d without the recession of the nozzle holder 47.

In the description above, the collection box 20 for collecting the used steam jet nozzle 36' is arranged below the nozzle coupling position. However, using a shooting plate (not shown in the attached drawings) for carrying the steam jet nozzle 36' that has fallen from the nozzle holder 47, the collection box 20 can be arranged at a position different from the position below the nozzle coupling position.

In the description above, the conical shape portion of the coupling section 36b' of the steam jet nozzle 36' is engaged in the conical cavity 47c formed at the innermost portion of the nozzle attachment slit 47d to support the steam jet nozzle 36'. However, the conical cavity 47c can be replaced at the same position with a circular portion having a diameter larger than the width of the slit and smaller than the diameter of the steam jet nozzle 36', and capable of engaging the conical shape portion of the coupling section of the steam jet nozzle. In this case, the steam jet nozzle 36' is attached to the nozzle holder with the straight pipe section 36a' inserted into the nozzle attachment slit 47d and the lower portion of the conical shape portion of the coupling section 36a' engaged in the circular portion. Therefore, the same attaching and detaching operations (pushing out) as in the case of the conical cavity 47c can be obtained.

Furthermore, in the description above, the cup 37 is manually attached to the cup holder 22'. However, each cup 37 can be automatically attached to the cup holder 22' by installing a cup feeder capable of feeding the cups 37 one by one.

Additionally, in the description above, the steam jet nozzle 36' is manually attached to the nozzle attachment slit 47d of the nozzle holder 47, but a nozzle feeder capable of feeding each steam jet nozzle 36' and a nozzle attacher capable of attaching each steam jet nozzle 36' to the nozzle attachment slit 47d of the nozzle holder 47 can be installed to automatically attach the steam jet nozzle 36' to the nozzle attachment slit 47d of the nozzle holder 47.

Furthermore, in the description above, a cap is manually attached to the cup 37 after completing soup, but a cap feeder capable of feeding each cap and a cap attacher capable of attaching a cap to the cup 37 can be installed to automatically attach a cap to the cup 37 after completing soup.

In addition, in the description above, soup powder as soup base is stored by type in the storage cases 27 to 29 and dry ingredients are stored in the storage cases 30 to 32 by type, but soup powder with ingredients corresponding to the prepared menu can be stored by type in the storage cases 27 to 32 and the menu can be selected on the operation unit 107 to put the soup powder with ingredients corresponding to the menu selected on the operation unit 107 can be put into the cup 37 from a predetermined storage case. It is obvious that the number of storage cases can be appropriately increased or decreased depending on the type of necessary materials, the menu, etc.

In the description above, the liquid food heating apparatus for producing soup is shown, but other types of liquid food to be heated, for example, miso soup, pork soup, chowder, sweet bean soup, etc. can be produced and served by changing the materials stored in the storage cases.

## Claims

1. A liquid food heating apparatus which heats a liquid food using steam, comprising:
a replaceable steam jet nozzle (36) having a predetermined shape;
a nozzle holder (18) to and from which the steam jet nozzle is attachable and detachable;
a steam feed pipe (17) coupled to the steam jet nozzle attached to the nozzle holder to be able to feed a steam into the steam jet nozzle;
nozzle coupling means (14a, 14b, 14c) capable of coupling the steam jet nozzle attached to the nozzle holder to the steam feed pipe before heating the liquid food, and releasing the coupling between the steam jet nozzle attached to the nozzle holder and the steam feed pipe after heating the liquid food; and
nozzle discard means (12b, 12c, 12d, 18c) capable of detaching from the nozzle holder the steam jet nozzle attached to the nozzle holder and discarding the steam jet nozzle after releasing the coupling between the steam jet nozzle attached to the nozzle holder and the steam feed pipe.

2. The liquid food heating apparatus according to claim 1, wherein:
the nozzle holder has a nozzle attachment slit (18b) having an aperture allowing attaching and detaching the steam jet nozzle; and
the nozzle discard means comprises nozzle pushing means (12b, 12c, 12d, 18c) capable of pressing the steam jet nozzle attached to the nozzle holder relatively along the nozzle attachment slit and pushing the steam jet nozzle out of the aperture of the nozzle attachment slit.

3. The liquid food heating apparatus according to claim 2, wherein:
the nozzle pressing means comprises holder moving means (12b, 12c, 12d) capable of moving the nozzle holder; and a nozzle pushing section (18c) for abutting the steam jet nozzle by the movement of the nozzle holder, and pushing the steam jet nozzle out of the aperture of the nozzle attachment slit.

4. The liquid food heating apparatus according to claim 3, wherein:
the nozzle pushing section (18c) abuts the steam jet nozzle and pushes the steam jet nozzle from the aperture of the nozzle attachment slit when the nozzle holder moves to a separated position from a nozzle coupling position.

5. The liquid food heating apparatus according to claim 3, wherein:
the nozzle pushing section (46d) abuts the steam jet nozzle and pushes the steam jet nozzle out of the aperture of the nozzle attachment slit, immediately after the nozzle holder starts moving to the position separate from the nozzle coupling position.

6. The liquid food heating apparatus according to claim 4 or 5, further comprising:
a collection box (20) for collecting the steam jet nozzle which is pushed out of the aperture of the nozzle attachment slit and falls,
wherein the collection box is arranged at a position separate from the nozzle coupling position.

7. The liquid food heating apparatus according to claim 4 or 5, further comprising:
a collection box (20) for collecting the steam jet nozzle which is pushed out of the aperture of the nozzle attachment slit and falls,
wherein the collection box is arranged below the nozzle coupling position.

8. The liquid food heating apparatus according to any one of claims 2 to 5, wherein:
the steam jet nozzle (36') includes a cylindrical straight pipe section (36a'), and a coupling section (36b') formed at an upper end of the straight pipe section, having a diameter larger than the straight pipe section, and having a conical shape portion at its lower surface;
the nozzle attachment slit (47d) allows the straight pipe section of the steam jet nozzle to pass therethrough, has a width less than the diameter of the coupling section, and includes a conical cavity (47c) capable of engaging with the conical shape portion of the coupling section of the steam jet nozzle; and
the steam jet nozzle can be attached to the nozzle holder in a state where the straight pipe section is inserted into the nozzle attachment slit, and the conical shape portion of the coupling section is engaged with the conical cavity and supported by the conical cavity.

9. The liquid food heating apparatus according to any one of claims 2 to 5, wherein:
the steam jet nozzle (36') includes a cylindrical straight pipe section (36a'), and a coupling section (36b') formed at an upper end of the straight pipe section, having a diameter larger than the straight pipe section, and having a conical shape portion at its lower surface;
the nozzle attachment slit (47d) allows the straight pipe section of the steam jet nozzle to pass therethrough, has a width less than the diameter of the coupling section, and includes a circular portion having a diameter smaller than the diameter of the coupling section and capable of engaging with the conical shape portion of the coupling section of the steam jet nozzle; and
the steam jet nozzle can be attached to the nozzle holder in a sate where the straight pipe section is inserted into the nozzle attachment slit, and the conical shape portion of the coupling section is engaged with the circular portion and supported by the circular portion.

10. A steam jet nozzle used for the liquid food heating apparatus according to any one of claims 2 to 5, wherein:
the steam jet nozzle includes a cylindrical straight pipe section ,and a coupling section formed at an upper end of the straight pipe section, having a diameter larger than the straight pipe section, and having a conical shape portion at its lower surface; and
the steam jet nozzle can be attached to the nozzle holder in a state where the straight pipe section is positioned in the nozzle attachment slit, and the conical shape portion of the coupling section is supported at an edge of the nozzle attachment slit.
